(19) Europäisches Patentamt
European Patent Office
Office européen des brevets

(11) **EP 3 956 619 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **20714515.2**

(22) Anmeldetag: **23.03.2020**

(51) Internationale Patentklassifikation (IPC):
**F28D 1/04** (2006.01)      **F28D 1/053** (2006.01)
**F28F 9/02** (2006.01)       **F28B 1/06** (2006.01)
**F28D 1/02** (2006.01)       **F28F 27/00** (2006.01)

(52) Gemeinsame Patentklassifikation (CPC):
**F28B 1/06; F28D 1/024; F28D 1/0426;**
**F28D 1/0435; F28D 1/05325; F28D 1/05333;**
**F28D 1/05366; F28F 9/0243; F28F 27/00;**
F28D 2001/0266; F28F 2265/06; F28F 2265/18;
Y02B 30/56

(86) Internationale Anmeldenummer:
**PCT/EP2020/057987**

(87) Internationale Veröffentlichungsnummer:
**WO 2020/212091 (22.10.2020 Gazette 2020/43)**

(54) **WÄRMEÜBERTRAGERANORDNUNG MIT WENIGSTENS EINEM MEHRPASS-WÄRMEÜBERTRAGER**

HEAT EXCHANGER ARRANGEMENT HAVING AT LEAST ONE MULTIPASS HEAT EXCHANGER

ENSEMBLE ÉCHANGEUR DE CHALEUR COMPRENANT AU MOINS UN ÉCHANGEUR DE CHALEUR À PLUSIEURS PASSAGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2019   DE 102019110237**

(43) Veröffentlichungstag der Anmeldung:
**23.02.2022   Patentblatt 2022/08**

(73) Patentinhaber: **Güntner GmbH & Co. KG**
**82256 Fürstenfeldbruck (DE)**

(72) Erfinder:
• **ERHARD, Alfred**
  **88147 Achberg (DE)**
• **BRENTROP, Hansjörg**
  **3653 Oberhofen am Thunersee (CH)**

(74) Vertreter: **Charrier Rapp & Liebau**
**Patentanwälte PartG mbB**
**Fuggerstraße 20**
**86150 Augsburg (DE)**

(56) Entgegenhaltungen:
EP-A1- 3 306 247        WO-A1-90/15299
WO-A1-2018/184908       DE-U1-202017 102 138

## Beschreibung

Die Erfindung betrifft eine Wärmeübertrageranordnung mit wenigstens einem Mehrpass-Wärmeübertrager, welcher einen ersten und einen zweiten Verteiler mit jeweils einem Anschlussstutzen zum Anschluss an eine Fluidleitung sowie mindestens einen ersten Umlenkverteiler und eine Mehrzahl von Rohrleitungen umfasst, wobei die Rohrleitungen von einem Fluid, insbesondere Wasser, durchströmbar sind, wobei in dem Umlenkverteiler wenigstens eine Lüftungsöffnung (10) zum Druckausgleich mit der Umgebung angeordnet ist.

Derartige Wärmeübertrageranordnungen mit wenigstens einem Mehrpass-Wärmeübertrager können beispielsweise als Rückkühler in Kühlsystemen zur Kühlung eines in dem Kühlsystem als Wärmeträgermedium eingesetzten Fluids verwendet werden. Der Rückkühler wird dabei in der Regel außerhalb einer zu kühlenden Einrichtung, beispielsweise außerhalb eines Gebäudes, platziert. Wenn als Wärmeträgermedium Wasser eingesetzt wird, besteht deshalb die Gefahr, dass das Wärmeträgermedium bei Frost am Aufstellort des Rückkühlers einfriert.

Aus dem Stand der Technik sind daher Kühlsysteme mit Wärmeübertrageranordnungen bekannt, die in einem Frostschutzbetrieb eine Entleerung des Rückkühlers ermöglichen. So ist beispielsweise aus der WO2018/184908 A1 ein Kühlsystem mit im Kreislauf geführtem Wasser als Wärmeträgermedium bekannt, welches einen Rückkühler und einen Wasserbehälter enthält, wobei der Rückkühler an einem ersten Endbereich einen Eingangssammler und einen Ausgangssammler sowie an seinem dem ersten Endbereich gegenüberliegenden zweiten Endbereich einen Umlenksammler mit einem ersten und einem zweiten Ast, die V-förmig zueinander angeordnet sind, umfasst. Der erste Ast und der zweite Ast des Umlenksammlers sind dabei über einen an ihrem oberen Ende angeordneten Verbindungszweig miteinander verbunden, wobei in dem Verbindungszweig eine zur Umgebung hin offene Lüftungsöffnung angeordnet ist. Zwischen dem Eingangssammler und dem ersten Ast des Umlenksammlers erstreckt sich eine in einer Durchströmungsrichtung ansteigende erste Rohranordnung und zwischen dem zweiten Ast des Umlenksammlers und dem Ausgangssammler erstreckt sich eine in der Durchströmungsrichtung abfallende zweite Rohranordnung. Der drucklos ausgebildete Wasserbehälter steht mit einem Eingang am Eingangssammler und mit einem Ausgang am Ausgangssammler in Verbindung, so dass das in dem Wasserbehälter bevorratete Kühlwasser in einem geschlossenen Kreislauf durch den Rückkühler geleitet werden kann. Zum Be- und Entlüften steht der Wasserbehälter über eine Be-/Entlüftungsleitung, die in die Lüftungsöffnung am Verbindungszweig des Umlenksammlers mündet, mit dem Rückkühler in Verbindung. Der so ausgebildete Rückkühler verfügt damit über zwei in Reihe geschaltete Einpass-Register mit einer ersten, als Hinleitung ausgebildete Rohranordnung, die den Eingangssammler mit dem Umlenksammler verbindet und ein erstes Einpass-Register bildet, und einer ein zweites Einpass-Register bildenden zweiten Rohranordnung, welche zwischen dem Umlenksammler und dem Ausgangssammler verläuft, um den Umlenksammler mit dem Ausgangssammler zu verbinden. In einem Rückkühlbetrieb wird das durch die Rohranordnungen geleitete Wasser durch Wärmeaustausch mit angesaugter Umgebungsluft gekühlt. Hierfür wird das in dem Wasserbehälter bevorratete Kühlwasser mittels einer Umwälzpumpe durch den Rückkühler geleitet. Zur Entleerung des Rückkühlers bei Frostgefahr ist bei diesem bekannten Kühlsystem vorgesehen, die Umwälzpumpe abzuschalten. Bei einer Abschaltung der Umwälzpumpe entleert sich der Rückkühler in Folge der ständigen Be-/Entlüftung des Umlenksammlers in Verbindung mit dem Gefälle der beiden Rohranordnungen der beiden Einpass-Register selbsttätig.

Wärmeübertrageranordnungen mit einem oder mehreren in Reihe geschalteten Einpass-Registern (Einpass-Wärmeübertrager) weisen jedoch im Vergleich zu Mehrpass-Systemen, in denen das Kühlmedium den oder die Wärmeübertrager mehrfach durchläuft, eine geringere Kühleffizienz auf. Zur Verbesserung der Kühleffizienz und zur Erhörung der Kühlleistung werden daher häufig Wärmeübertrageranordnungen mit Mehrpass-Registern eingesetzt. Dies ist insbesondere erforderlich, wenn Kühlleistungen zwischen 100 und 1500 kW erzielt werden sollen.

Eine Kühlanordnung mit einem Zweipass-Register ist beispielsweise aus der WO 90/15299-A bekannt. Das darin als Wärmeträgermedium eingesetzte Kühlwasser durchfließt dabei einen Wärmetauscher der Kühlanlage zweimal (2-Pass-Wärmeübertrager). Hierfür ist ein Wärmeübertrager mit einem an einem Ende des Wärmeübertragers angeordneten Eingangssammler und einem Auslasssammler sowie einem am gegenüberliegenden Ende angeordneten Umlenksammler vorgesehen, wobei sich zwischen dem Eingangssammler und dem Umlenksammler als Hinleitungen ausgebildete Rohrleitungen erstrecken und sich zwischen dem Umlenksammler und dem Ausgangssammler als Rückleitungen ausgebildete Rohrleitungen erstrecken. In einem Rückkühlbetrieb wird das Kühlwasser zunächst in einem ersten Durchlauf (erster Pass) durch die Hinleitungen und in einem zweiten Durchlauf (zweiter Pass) durch die Rückleitungen geleitet. Während der Durchleitung des Kühlwassers durch die Rohrleitungen des Zweipass-Wärmeübertragers findet zur Kühlung des Kühlwassers ein Wärmeaustausch mit einem von einem Ventilator angesaugten und durch den Zwei-Pass-Wärmeübertrager geleiteten Luftstrom der Umgebungsluft statt.

Bei der Verwendung von Mehrpass-Wärmeübertragern in frostgefährdeten Bereichen besteht die Gefahr, dass der Mehrpass-Wärmeübertrager nicht schnell genug und nicht vollständig entleert werden kann, um ein Einfrieren des Wärmeträgermediums (insbesondere Kühlwasser) zu verhindern. Insbesondere bei einem sehr schnellen Temperaturabfall des sich im Mehrpass-Wärmeübertrager befindlichen Wärmeträgermediums infolge einer schnellen Erniedrigung der Umgebungstemperatur oder eines starken Windeinflusses auf den Wärmeübertrager, muss auch bei Verwendung von Mehrpass-Wärmeübertragern gewährleistet sein, dass der Wärmeübertrager innerhalb kürzester Zeit vollständig entleert werden kann, um ein Einfrieren des Wärmeträgermediums zu verhindern. Eine schnelle Entleerung eines Mehrpass-Wärmeübertragers ist jedoch aufgrund der langen Rohrleitungen, die vom Wärmeträgermedium mehrfach durchflossen werden und der dadurch bedingten langen Transportwege des Wärmeträgermediums durch die Rohrleitungen des Mehrpass-Wärmeübertragers schwierig. Die Länge der Rohrleitungen (einer Hin- bzw. Rückleitung) kann dabei zwischen 3 bis 15 m liegen. Aus demselben Grund ist auch eine schnelle Wiederbefüllung eines Mehrpass-Wärmeübertragers bei einer Wiederaufnahme des Rückkühlbetriebs nach Wegfall der Frostgefahr schwierig.

Hiervon ausgehend liegt der Erfindung die Aufgabe zugrunde, eine Wärmeübertrageranordnung mit wenigstens einem Mehrpass-Wärmeübertrager aufzuzeigen, welche eine hohe Kühlleistung bei einer möglichst hohen Effizienz aufweist und bei Frostgefahr möglichst schnell und vollständig entleert und für eine Wiederaufnahme eines Rückkühlbetriebs nach Beendigung der Frostgefahr auch wieder möglichst schnell mit einem Wärmeträgermedium befüllt werden kann. Eine weitere Aufgabe besteht darin, beim Befüllen des wenigstens einen Mehrpass-Wärmeübertragers zu verhindern, dass überschüssiges Fluid aus dem Wärmeübertrager und insbesondere aus dem wenigstens einen Umlenkverteiler des Mehrpass-Wärmeübertragers austreten kann.

Diese Aufgaben werden gemäß der Erfindung mit einer Wärmeübertrageranordnung mit den Merkmalen des Anspruchs 1 gelöst. Zur Lösung der Aufgabe trägt ferner ein Kühlsystem gemäß Anspruch 16 bei, in dem eine erfindungsgemäße Wärmeübertrageranordnung als Rückkühler zur Kühlung eines als Wärmeträgermedium eingesetzten Fluids verwendet wird.

Die erfindungsgemäße Wärmeübertrageranordnung umfasst wenigstens einen Mehrpass-Wärmeübertrager, welcher einen ersten Verteiler, einen zweiten Verteiler und wenigstens einen rohrförmig ausgebildeten Umlenkverteiler mit einem vorgegebenen Rohrquerschnitt ($A_U$) sowie eine Rohrleitungsanordnung mit einer Mehrzahl von zumindest im Wesentlichen parallel zueinander verlaufenden Rohrleitungen mit einem vorgegebenen Rohrquerschnitt ($A_R$) aufweist, wobei die Rohrleitungen von einem Fluid, insbesondere Wasser, durchströmbar sind und in der Rohrleitungsanordnung spaltenweise mit einer vorgegebenen Anzahl von Spalten (n) angeordnet sind, und der erste Verteiler und der zweite Verteiler an einem Ende der Wärmeübertrageranordnung angeordnet sind und der Umlenkverteiler am gegenüberliegenden Ende angeordnet ist und die Rohrleitungen sich von dem einen Ende zum gegenüberliegenden Ende erstrecken und mit dem Umlenkverteiler sowie dem ersten oder dem zweiten Verteiler in Verbindung stehen und an einem höchsten Punkt oder zumindest in der Nähe des höchsten Punkts des Umlenkverteilers wenigstens eine Lüftungsöffnung zum Druckausgleich mit der Umgebung angeordnet ist. Dabei ist erfindungsgemäß vorgesehen, dass

a) in der wenigstens einen Lüftungsöffnung ein Ventil angeordnet ist, das geöffnet und geschlossen werden kann, wobei bei vollständiger Öffnung des Ventils ein Strömungsquerschnitt (d) zum Durchtritt von Luft frei gegeben ist,
b) der Rohrquerschnitt ($A_U$) des Umlenkverteilers und der Strömungsquerschnitt (d) des Ventils gleich oder größer als ein Mindestquerschnitt ($D_{min}$) ist,
c) wobei sich der Mindestquerschnitt ($D_{min}$) aus dem Produkt der Anzahl von Spalten in der Rohrleitungsanordnung und dem Rohrquerschnitt ($A_R$) der Rohrleitungen ( $D_{min} = n\,A_R$ ) berechnet.

Wenn von einem höchsten Punkt eines Verteilers gesprochen wird, ist dabei der geodätisch höchste Punkt des jeweiligen Verteilers gemeint. Wenn von einem tiefsten Punkt gesprochen wird, ist jeweils der geodätisch tiefste Punkt der jeweiligen Einrichtung (Verteiler) gemeint, insbesondere der in Bezug auf die vertikale Richtung gesehen tiefste Punkt. Dabei ist jeweils auch ein Punkt mit umfasst, der zumindest in der Nähe des geodätisch höchsten bzw. des geodätisch tiefsten Punkts liegt.

Durch die Anordnung des Ventils in der wenigstens einen Lüftungsöffnung des Umlenkverteilers kann verhindert werden, dass beim Befüllen des Mehrpass-Wärmeübertragers das Fluid aus der Lüftungsöffnung und damit aus dem Wärmeübertrager herausfließen kann. Durch die gemäß der Erfindung gewählte Dimensionierung, bei welcher der Rohrquerschnitt ($A_U$) des Umlenkverteilers und der Strömungsquerschnitt (d) des Ventils gleich oder größer als ein Mindestquerschnitt ($D_{min}$) ist, der sich aus dem Produkt der Anzahl von Spalten in der Rohrleitungsanordnung und dem Rohrquerschnitt ($A_R$) der Rohrleitungen ($D_{min} = n \cdot A_R$ ) berechnet, ist ferner gewährleistet, dass beim Befüllen des Mehrpass-Wärmeübertragers das gesamte pro Zeiteinheit über den ersten und den zweiten Verteiler in die Rohrleitungen eingefüllte Fluidvolumen von dem wenigstens einen Umlenkverteiler aufgenommen werden kann und die sich in dem Umlenkverteiler befindliche Luft dabei vollständig durch die Lüftungsöffnung entweichen kann, um den Umlenkverteiler zu entlüften.

Bevorzugt ist das Ventil als sich selbsttätig verschließendes Regelventil ausgebildet, das sich bei Eintritt des Fluids in das Ventil selbsttätig (d.h. ohne externe Ansteuerung) verschließt. Dadurch wird ein automatisches Verschließen der Lüftungsöffnung ermöglicht, sobald der Umlenkverteiler zumindest weitgehend vollständig mit Fluid befüllt ist. Da die Lüftungsöffnung zweckmäßig am höchsten Punkt des Umlenkbverteilers angeordnet ist, erfolgt das selbsttätige Verschließen des Ventils dabei erst, wenn der Umlenkverteiler vollständig, d.h. bis zu seinem oberen Ende, an dem sich die Lüftungsöffnung befindet, mit Fluid befüllt ist. Dies ermöglicht eine vollständige Befüllung des Wärmeübertragers, ohne dass das Fluid aus dem Wärmeübertrager herausfließen kann.

Eine Ansteuerung des Ventils kann jedoch auch hydraulisch, pneumatisch oder elektrisch erfolgen. Bei einer hydraulischen, pneumatischen oder elektrischen Ansteuerung des Ventils wird zweckmäßig von einer Steuereinrichtung ein Steuersignal zum Öffnen oder Verschließen des Ventils in Abhängigkeit einer berechneten Befüllzeit oder eines gemesssenen hydrostatischen Drucks des Fluids in der Wärmeübertrageranordnung erzeugt und an das Ventil übermittelt. Auf diese Weise kann bspw. das Ventil bei Beendigung eines Befüllungsbetriebs geschlossen werden, um zu verhindern, dass das Fluid nach vollständiger Befüllung der Wärmeübertrageranordnung aus den Wärmeübertragern und insbesondere aus deren Umlenkverteiler herausfließen kann. Das Schließen des Ventils erfolgt dabei bspw. nach Ablauf einer von der Steuereinrichtung aus den Parametern der Wärmeübertrageranordnung berechneten Befüllzeit, oder sobald ein von einem Drucksensor erfasster hydrostatischer Druck des Fluids in den Wärmeübertragern einen vorgegebenen Druckgrenzwert übersteigt.

In einer bevorzugten Ausführungsform weist das Ventil eine Kammer und einen darin beweglich gelagerten Schwimmkörper auf, wobei bei Eintritt des Fluids in die Kammer der Schwimmkörper das Ventil verschließt, insbesondere wenn das Fluid ein vorgegebenes Niveau in der Kammer erreicht oder überschreitet.

Besonders bevorzugt ist die Verwendung eines mehrstufigen Ventils, insbesondere eines zweistufigen Ventils, das sich bei Eintritt des Fluids stufenweise verschließt. Dadurch kann beim Befüllen des Wärmeübertragers mit dem Fluid einerseits eine vollständige Entlüftung des Wärmeübertragers gewährleistet werden, solange sich noch Luft darin (und insbesondere im Umlenkverteiler) befindet und andererseits kann sichergestellt werden, dass das Ventil vollständig verschlossen ist, sobald der Wärmeübertrager vollständig mit dem Fluid befüllt ist.

Die stufenweise Verschließung des Ventils ist dabei zweckmäßig so gestaltet, dass die Lüftungsöffnung durch das Ventil vollständig und luftdicht verschlossen wird, sobald das Fluid in einer Kammer des Ventils ein vorgegebenes Niveau erreicht. Hierfür ist in der Kammer ein Ventilkörper beweglich gelagert, wobei der Ventilkörper bei Eintritt des Fluids in die Kammer zunächst in Richtung eines Ventilsitzes bewegt und schließlich gegen den Ventilsitz gepresst wird, wodurch der Strömungsquerschnitt (d) des Ventils in einer ersten Verschlussstufe zunächst nur teilweise verschließt, so dass noch Luft aus dem Ventil ausströmen kann. Eine (anschließende, in einer zweiten Stufe erfolgende) luftdichte Abdichtung des Ventils kann durch eine Mehrzahl von Öffnungen in dem Ventilkörper ermöglicht werden, wobei die Öffnungen einen Teil des Strömungsquerschnitts (d) des Ventils ausbilden und der Ventilkörper mit dem beweglich gelagerten Schwimmkörper gekoppelt ist, so dass die Öffnungen bei ansteigendem Innendruck in der Kammer stufenlos verschlossen werden, bis der gesamte Strömungsquerschnitt (d) des Ventils in einer zweiten Verschlussstufe vollständig und luftdicht verschlossen ist.

In einem bevorzugten Ausführungsbeispiel der erfindungsgemäßen Wärmeübertrageranordnung umfasst die Rohrleitungsanordnung des Mehrpass-Wärmeübertragers zwischen 4 und 10 und bevorzugt zwischen 5 und 7 Spalten, so dass die Anzahl von Spalten n zwischen 4 und 10 und bevorzugt zwischen 5 und 7 ist. Der Innendurchmesser der Rohrleitungen liegt bspw. bei 15 mm. Der sich daraus ergebende Mindestquerschnitt ($D_{min} = n\ A_R$) liegt entsprechend zwischen 5 und 20 cm$^2$ und insbesondere zwischen 10 und 15 cm$^2$. Bei einem Innendurchmesser der Rohrleitungen von 20 mm ergibt sich (bei n zwischen 4 und 10) ein Mindestquerschnitt ($D_{min} = n\ A_R$) von 10 bis 35 cm$^2$.

Der Rohrquerschnitt ($A_U$) des Umlenkverteilers kann dabei größer als der Strömungsquerschnitt (d) des Ventils gewählt werden. Dies ermöglicht eine problemlose, vollständige Aufnahme des beim Befüllen aus den Rohrleitungen in den Umlenkverteiler strömenden Fluidvolumens und stellt dennoch sicher, dass der Umlenkverteiler dabei vollständig durch Entweichen der Luft über das (zumindest noch teilweise geöffnete) Ventil entlüftet werden kann. Der Durchmesser ($D_U$) des Umlenkverteilers liegt in bevorzugten Ausführungsbeispielen zwischen 30 mm und 200 mm. Der Strömungsquerschnitt (d) des Ventils liegt zweckmäßig zwischen 10 und 30 cm$^2$ und bevorzugt zwischen 15 und 25 cm$^2$.

Um für Wartungs- und Revisionsarbeiten ein vollständiges Verschließen des Umlenkverteilers auch ohne (vollständige) Befüllung des Wärmeübertragers zu ermöglichen ist zweckmäßig zusätzlich zu dem Ventil ein manuell betätigbares Revisionsventil vorgesehen, mit dem die Lüftungsöffnung verschlossen werden kann.

Um ein möglichst schnelles Befüllen und Entleeren der Wärmeübertrageranordnung zu ermöglichen, ist bevorzugt an einem tiefsten Punkt oder zumindest in der Nähe des tiefsten Punkts des ersten Verteilers ein erster Anschlussstutzen angeordnet und an einem tiefsten Punkt oder zumindest in der Nähe des tiefsten Punkts des zweiten Verteilers ist ein zweiter Anschlussstutzen angeordnet. An einem höchsten Punkt oder zumindest in der Nähe des höchsten Punkts des zweiten Verteilers ist bevorzugt ein dritter Anschlussstutzen angeordnet. Die Rohrleitungen der Rohrleitungsanordnung sind ferner zweckmäßig zur horizontalen Ebene geneigt, und zwar bevorzugt zum vorderen Ende der Wärmeübertrageranordnung hin, wo der erste und der zweite Verteiler angeordnet sind. Dadurch kann sowohl eine schnelle Entleerung als auch eine schnelle Befüllung des oder der Mehrpass-Wärmeübertrager mit dem als Wärmeträgermedium eingesetzten Fluid erfolgen, indem bei Frostgefahr in einem Entleerungsbetrieb das Fluid schwerkraftbedingt aufgrund einer Neigung der Rohrleitungen zur Horizontalen gleichzeitig aus allen Rohrleitungen in den ersten und den zweiten Verteiler und von dort jeweils über den an dem tiefsten Punkt des ersten und des zweiten Verteilers angeordneten Anschlussstutzen (erster bzw. zweiter Anschlussstutzen) in eine mit den Anschlussstutzen in Verbindung stehende Fluidleitung abfließen kann. In entsprechender Weise kann das Fluid in einem Befüllungsbetrieb sehr schnell entgegen der Schwerkraft aus dem ersten und dem zweiten Verteiler gleichzeitig in alle Rohrleitungen des Mehrpass-Wärmeübertragers eingeleitet werden. Dadurch verkürzt sich die Entleerungs- bzw. die Befüllungszeit beim Entleeren bzw. Befüllen des Wärmeübertragers erheblich, weil das Fluid nicht gemäß der Strömungspfade beim Rückkühlbetrieb der Wärmeübertrageranordnung in den oder die Mehrpass-Wärmeübertrager eingeleitet wird, sondern über den ersten und den zweiten Verteiler gleichzeitig in bzw. aus allen Rohrleitungen des Mehrpass-Wärmeübertragers strömen kann.

Ein schnelles Herausfließen des Fluids aus den Rohrleitungen des Mehrpass-Wärmeübertragers in dem Entleerungsbetrieb wird dabei durch die Neigung der Rohrleitungen zur horizontalen Ebene unterstützt. Die zweckmäßig in der Rohrleitungsanordnung parallel zueinander verlaufenden Rohrleitungen schließen bevorzugt mit der Horizontalen einen Winkel zwischen 0,5° und 5° und besonders bevorzugt einen Winkel zwischen 2° und 4°, insbesondere 3° ein.

Bei dem Mehrpass-Wärmeübertrager kann es sich bspw. um einen 2-pass-Wärmeübertrager handeln, in dem das Fluid zweifach durch die Rohrleitungen des Wärmeübertragers strömt und dabei im Wärmeaustausch mit Kühlluft steht, die zweckmäßig von einem oder mehreren Ventilatoren aus der Umgebung angesaugt und durch den Wärmeübertrager geleitet wird.

Die Rohrleitungen jedes Mehrpass-Wärmeübertragers sind dabei in einer ersten und einer zweiten Gruppe von Rohrleitungen unterteilt, wobei die erste Gruppe von Rohrleitungen als Hinleitungen und die zweite Gruppe von Rohrleitungen als Rückleitungen dienen. Im Rückkühlbetrieb kann das Fluid beispielsweise über den als Eingangsverteiler ausgebildeten ersten Anschlussstutzen in den ersten Verteiler eingeleitet werden und das Fluid durchströmt die Hinleitungen (erste Gruppe von Rohrleitungen) des 2-pass-Wärmeübertragers in einem ersten Durchlauf zum ersten Umlenkverteiler und wird von dort in die Rückleitungen (zweite Gruppe von Rohrleitungen) umgelenkt, so dass das Fluid dann in einem zweiten Durchlauf in den Rückleitungen zum zweiten Verteiler (Ausgangsverteiler) zurückfließen kann. Das Fluid verlässt den Zweipass-Wärmeübertrager dabei über den am höchsten Punkt des zweiten Verteilers angeordneten dritten Anschlussstutzen. Dabei können die beiden Verteiler (erster Verteiler und zweiter Verteiler) auch miteinander vertauscht werden, d.h., es ist möglich, dass das Fluid zuerst in den als Eingangsverteiler ausgebildeten zweiten Verteiler einströmt und aus dem als Ausgangsverteiler ausgebildeten ersten Verteiler ausströmt.

Bei dem Mehrpass-Wärmeübertrager kann es sich auch um einen 4-pass-Wärmeübertrager handeln, in dem das Fluid vierfach durch die Rohrleitungen des Wärmeübertragers strömt und dabei im Wärmeaustausch mit der Kühlluft steht. Bei einem 4-pass-Wärmeübertrager ist neben dem ersten und dem zweiten Verteiler und dem ersten Umlenkverteiler noch ein zweiter und ein dritter Umlenkverteiler vorgesehen, wobei der erste und der zweite Verteiler sowie der dritte Umlenkverteiler an einem Ende der Wärmeübertrageranordnung und der erste und der zweite Umlenkverteiler am gegenüberliegenden Ende der Wärmeübertrageranordnung angeordnet sind und die Rohrleitungen sich von dem einen Ende zum gegenüberliegenden Ende erstrecken, um den ersten und den zweiten Verteiler mit einem der Umlenkverteiler zu verbinden. Dabei ist wiederum an einem tiefsten Punkt oder zumindest in der Nähe des tiefsten Punkts des ersten Verteilers und des zweiten Verteilers ein Anschlussstutzen angeordnet (erster und zweiter Anschlussstutzen) angeordnet und an dem zweiten Verteiler ist wiederum ein dritter Anschlussstutzen an einem höchsten Punkt oder zumindest in der Nähe des höchsten Punkts des zweiten Verteilers angeordnet. An dem dritten Umlenkverteiler ist dabei zweckmäßig an einem tiefsten Punkt oder zumindest in der Nähe des tiefsten Punkts des dritten Umlenkverteilers ein vierter Anschlussstutzen angeordnet.

Im Rückkühlbetrieb des 4-pass-Wärmeübertragers kann das Fluid beispielsweise über den als Eingangsverteiler ausgebildeten ersten Anschlussstutzen in den ersten Verteiler eingeleitet werden und das Fluid durchströmt die Hinleitungen (erste Gruppe von Rohrleitungen) des 4-pass-Wärmeübertragers in einem ersten Durchlauf zum ersten Umlenkverteiler und wird von dort in die Rückleitungen (zweite Gruppe von Rohrleitungen) umgelenkt, so dass das Fluid dann in einem zweiten Durchlauf in den Rückleitungen zum dritten Umlenkverteiler am ersten Ende der Wärmeübertrageranordnung zurückfliest und dort von dem dritten Umlenkverteiler wieder in Rohrleitungen der ersten Gruppe (Hinleitungen) umgelenkt wird und in einem dritten Durchlauf zum zweiten Umlenkverteiler fließt und dort wiederum in Rohrleitungen der zweiten Gruppe (Rückleitungen) umgelenkt wird, um schließlich in einem vierten Durchlauf zum zweiten Verteiler (Ausgangsverteiler) zurückzufließen. Das Fluid verlässt den Mehrpass-Wärmeübertrager dabei über den am höchsten Punkt des zweiten Verteilers angeordneten dritten Anschlussstutzen. Dabei können die beiden Verteiler (erster Verteiler und zweiter Verteiler) auch miteinander vertauscht werden, d.h., es ist möglich, dass das Fluid zuerst in den als Eingangsverteiler ausgebildeten zweiten Verteiler einströmt und aus dem als Ausgangsverteiler ausgebildeten ersten Verteiler ausströmt.

Um zu gewährleisten, dass der Mehrpass-Wärmeübertrager beim Befüllen und während des Rückkühlbetriebs jederzeit vollständig mit Fluid gefüllt ist (wodurch eine verbesserte Effizienz erzielt werden kann) ist es sowohl beim 2-pass- als auch beim 4-pass-Wärmeübertrager zu bevorzugen, dass das Fluid über den ersten Anschlussstutzen (am tiefsten Punkt des ersten Verteilers) in den Wärmeübertrager eintritt und den Wärmeübertrager an dem zweiten Anschlussstutzen (am höchsten Punkt des zweiten Verteilers) verlässt.

Die Verteiler, also der erste und der zweite Verteiler sowie jeder Umlenkverteiler, können jeweils als rohrförmige Mehrfachverteiler ausgebildet sein. Die Rohre der Verteiler können dabei mit ihrer Längsachse vertikal stehend oder auch schräg zur Vertikalen geneigt angeordnet sein.

Eine hohe Wärmeaustauscheffizienz und eine kompakte Bauweise der Wärmeübertrageranordnung lässt sich erzielen, wenn die Wärmeübertrageranordnung zwei gegenüberliegend angeordnete Mehrpass-Wärmeübertrager enthält, wobei die beiden Mehrpass-Wärmeübertrager schräg zur Vertikalen geneigt und V-förmig zueinander stehend angeordnet sind. Entsprechend dieser schrägstehenden Anordnung der Wärmeübertrager verlaufen die rohrförmigen Verteiler (erster Verteiler und zweiter Verteiler sowie die Umlenkverteiler) ebenfalls schräg stehend zur Vertikalen.

Eine besonders kompakte Bauweise lässt sich erzielen, wenn der erste und der zweite Umlenkverteiler in einem gemeinsamen Sammelrohr mit einer darin angeordneten Trennwand enthalten sind, wobei die Trennwand das gemeinsame Sammelrohr in einen Zuströmbereich, der den ersten Verteiler bildet, und einen Abströmbereich, der den zweiten Verteiler bildet, unterteilt. In entsprechender Weise kann beim 4-pass-Wärmeübertrager auch der erste und der zweite Umlenkverteiler, die jeweils am anderen Ende der Wärmeübertrageranordnung benachbart zueinander angeordnet sind, in einem gemeinsamen Sammelrohr mit einer Trennwand angeordnet sein, wobei die Trennwand das Sammelrohr in wenigstens zwei Bereiche unterteilt, wobei ein erster Bereich den ersten Umlenkverteiler und ein zweiter Bereich den zweiten Umlenkverteiler bildet.

In entsprechender Weise können beim 4-pass-Wärmeübertrager auch der erste Verteiler, der zweite Verteiler sowie der dritte Umlenkverteiler, die jeweils an einem Ende der Wärmeübertrageranordnung benachbart zueinander angeordnet sind, in einem gemeinsamen Sammelrohr angeordnet sein, wobei das Sammelrohr wiederum ein Trennelement enthält, welches das Sammelrohr zumindest in einen Zuströmbereich (der den ersten Verteiler ausbildet), einen Abströmbereich (der dem zweiten Verteiler ausbildet) und einen Umlenkbereich (der den dritten Umlenkverteiler ausbildet) unterteilt. Dabei sind in dem gemeinsamen Sammelrohr der erste, der zweite, der dritte und der vierte Anschlussstutzen angeordnet, wobei der erste Anschlussstutzen im Zuströmbereich an einem tiefsten Punkt des gemeinsamen Sammelrohrs, der zweite Anschlussstutzen im Abströmbereich an einem höchsten Punkt des gemeinsamen Sammelrohrs, der dritte Anschlussstutzen im Abströmbereich an einem tiefsten Punkt des gemeinsamen Sammelrohrs und der vierte Anschlussstutzen an einem tiefsten Punkt des Umlenkbereichs angeordnet ist.

Um den ersten und den zweiten Anschlussstutzen sowie ggf. den beim 4-pass-Wärmeübertrager vorhandenen vierten Anschlussstutzen, die jeweils an einem tiefsten Punkt des betreffenden Verteilers (erster Verteiler und zweiter Verteiler, ggf. dritter Umlenkverteiler) angeordnet sind, je nach Betriebsmodus der Wärmeübertrageranordnung öffnen oder schließen zu können, ist bevorzugt jedem dieser Anschlussstutzen ein steuerbares Ventil zugeordnet. Das steuerbare Ventil kann dabei insbesondere in dem jeweiligen Anschlussstutzen (erster, zweiter oder vierter Anschlussstutzen) angeordnet sein. Die Ansteuerung der steuerbaren Ventile kann beispielsweise hydraulisch, pneumatisch oder elektrisch erfolgen.

In einer zweckmäßigen Ausführungsform der Wärmeübertrageranordnung sind der erste und der zweite Verteiler sowie der dritte Umlenkverteiler an einem vorderen stirnseitigen Ende der Wärmeübertrageranordnung angeordnet und der erste und der zweite Umlenkverteiler sind an der gegenüberliegenden, hinteren Stirnseite der Wärmeübertrageranordnung angeordnet. Beim 4-pass-Wärmeübertrager ist an der vorderen Stirnseite benachbart zum ersten und zweiten Verteiler der dritte Umlenkverteiler und an der hinteren Stirnseite benachbart zum ersten Umlenkverteiler der zweite Umlenkverteiler angeordnet. Dadurch kann eine kompakte Bauweise und eine den Erfordernissen in Bezug auf die Kühlleistung entsprechende Dimensionierung der Wärmeübertrageranordnung gewährleistet werden.

Die erfindungsgemäße Wärmeübertrageranordnung kann sowohl in der 2-pass- als auch in der 4-pass-Version in verschiedenen Betriebsmodi, insbesondere in einem Rückkühlbetrieb, einem Entleerungsbetrieb bei Frostgefahr, einem Befüllungsbetrieb zur erstmaligen Befüllung der Wärmeübertrageranordnung oder für eine Wiederbefüllung nach Beendigung der Frostgefahr sowie in einem Stand-by-Betrieb nach einer erfolgten Entleerung der Wärmeübertrageranordnung bei Frostgefahr bzw. bei anhaltendem Frost betrieben werden. Zur Umschaltung der Wärmeübertrageranordnung von einem Betriebsmodus in einen anderen Betriebsmodus ist eine Steuereinrichtung zur Steuerung der Wärmeübertrageranordnung vorgesehen. Die Steuerung der Wärmeübertrageranordnung und insbesondere die Einstellung eines geeigneten Betriebsmodus erfolgt in Abhängigkeit von Umgebungsparametern, wie z.B. der Außentemperatur und der Windgeschwindigkeit am Aufstellort der Wärmeübertrageranordnung. Zur Erfassung der Umgebungsparameter sind zweckmäßig Sensoren, insbesondere ein Thermometer zur Erfassung der Außentemperatur und ein Windmesser zur Erfassung der Windgeschwindigkeit, vorgesehen und mit der Steuereinrichtung gekoppelt. Die von den Sensoren erfassten Messwerte der Umgebungsparameter werden der Steuereinrichtung zugeführt. Neben den Umgebungsparametern wie Außentemperatur und Windgeschwindigkeit wird zweckmäßig über weitere Sensoren, insbesondere Thermometer, die Eingangstemperatur des Fluids beim Eintritt in die Wärmeübertrageranordnung erfasst. Weiterhin kann über Druck- oder Durchflusssensoren der Volumenstrom des in die Wärmeübertrageranordnung einströmenden bzw. des aus der Wärmeübertrageranordnung ausströmenden Fluidstroms gemessen und der Steuereinrichtung zugeleitet werden. Die Steuereinrichtung berechnet auf Basis der zugeleiteten Messwerte, insbesondere unter Berücksichtigung der Außentemperatur und der Eingangstemperatur des Fluids, eine prognostizierte Austrittstemperatur des Fluids beim Austritt aus der Wärmeübertrageranordnung. Wenn die berechnete Austrittstemperatur größer oder gleich einem vorgegebenen Grenzwert ist, schaltet die Steuereinrichtung den Betrieb der Wärmeübertrageranordnung vom Rückkühlbetrieb in den Entleerungsbetrieb um. Aus der rechnerisch ermittelten Austrittstemperatur des Fluids beim Austritt aus der Wärmeübertrageranordnung kann bei niedrigen Außentemperaturen unterhalb des Gefrierpunkts des Fluids (bei dem es sich bevorzugt um Wasser handelt) eine Einfriergefahr des Fluids erfasst werden. Um in einer solchen Situation ein Einfrieren des Fluids in den Rohrleitungen bzw. den Verteilern der Wärmeübertrageranordnung zu verhindern, schaltet die Steuereinrichtung möglichst schnell in den Entleerungsbetrieb um, in dem das sich in den Rohrleitungen befindliche Fluid gleichzeitig aus allen Rohrleitungen in den ersten und den zweiten Verteiler sowie den ggf. (beim 4-pass-Wärmeübertrager) vorhandenen dritten Umlenkverteiler und von dort durch die jeweils am tiefsten Punkt dieser Verteiler angeordneten Anschlussstutzen (erster, zweiter und vierter Anschlussstutzen) in eine mit diesen Anschlussstutzen in Verbindung stehende Fluidleitung aus dem frostgefährdeten Bereich abfließen kann.

Diese und weitere Merkmale sowie Vorteile der Erfindung ergeben sich aus dem nachfolgend unter Bezugnahme auf die begleitenden Zeichnungen näher beschriebenen Ausführungsbeispiel. Die Zeichnungen zeigen:

Fig.1:  Darstellung eines bevorzugten Ausführungsbeispiels einer erfindungsgemäßen Wärmeübertrageranordnung mit zwei V-förmig zueinander angeordneten 2-pass-Wärmeübertragern in einer Ansicht auf eine vordere Stirnseite der Wärmeübertrageranordnung;

Fig. 2:  Seitenansicht der 2-pass-Wärmeübertrageranordnung von Figur 1;

Fig. 3:  Ansicht auf die hintere Stirnseite der 2-pass-Wärmeübertrageranordnung von Figur 1;

Fig. 4:  Schematische Übersichts-Darstellung des Ausführungsbeispiels einer erfindungsgemäßen Wärmeübertrageranordnung der Figuren 1 bis 3 mit zwei V-förmig zueinander angeordneten 2-pass-Wärmeübertragern in einer Ansicht auf die vordere Stirnseite der Wärmeübertrageranordnung (Figur 4a), auf die hintere Stirnseite der 2-pass-Wärmeübertrageranordnung (Figur 4b) und in einer Seitenansicht (Figur 4c);

Fig. 5:  Schematische Darstellung verschiedener Betriebsmodi der 2-pass-Wärmeübertrageranordnung von Figur 4, wobei in Figur 5a ein Rückkühlbetrieb, in Figur 5b ein Befüllungsbetrieb und in Figur 5c ein Entleerungsbetrieb des 2-pass-Wärmeübertragers dargestellt ist;

Fig. 6:  Darstellungen der verschiedenen Betriebsmodi der 2-pass-Wärmeübertrageranordnung aus Figur 4 anhand von Querschnittszeichnungen des 2-pass-Wärmeübertragers durch eine horizontale Ebene, wobei in Figur 6a der Rückkühlbetrieb, in Figur 6b der Befüllungsbetrieb und in Figur 6c der Entleerungsbetrieb des 2-pass-Wärmeübertragers dargestellt ist und Figur 6d eine Schnittzeichnung durch die Rohrleitungsanordnung der Wärmeübertrageranordnung in einer senkrecht zu den Rohrleitungen stehenden Schnittebene zeigt;

Fig. 7:  Schematische Darstellung eines Kühlsystems, welches eine erfindungsgemäße Wärmeübertrageranordnung mit zwei gegenüberliegenden 2-pass-Wärmeübertragern enthält, wobei in Figur 7a das gesamte Kühlsystem und die darin eingesetzte Wärmeübertrageranordnung sowohl in einer Ansicht auf die vordere Stirnseite und in einer Seitenansicht gezeigt ist und Figur 7b einen Detailausschnitt aus Figur 7a im Bereich der Wärmeübertrageranordnung zeigt;

Fig. 8:  Schematische Darstellung verschiedener Betriebsmodi der Wärmeübertrageranordnung des Kühlsystems von Figur 7, wobei Figur 8a die Wärmeübertrageranordnung im Rückkühlbetrieb, Figur 8b die Wärmeübertrageranordnung im Entleerungsbetrieb und Figur 8c die Wärmeübertrageranordnung im Befüllungsbetrieb zeigt;

Fig. 9:  Schematische Darstellung eines weiteren Ausführungsbeispiels eines Kühlsystems mit einer Kombination von zwei Wärmeübertrageranordnungen gemäß der Erfindung;

**Fig. 10:** Schematische Darstellung möglicher Betriebsmodi der Kombination von Wärmeübertrageranordnungen aus Figur 9

**Fig. 11:** Schematische Darstellung eines sich selbsttätig verschließenden Ventils zur Verwendung in einer erfindungsgemäßen Wärmeübertrageranordnung in verschiedenen Funktionsstellungen des Ventils.

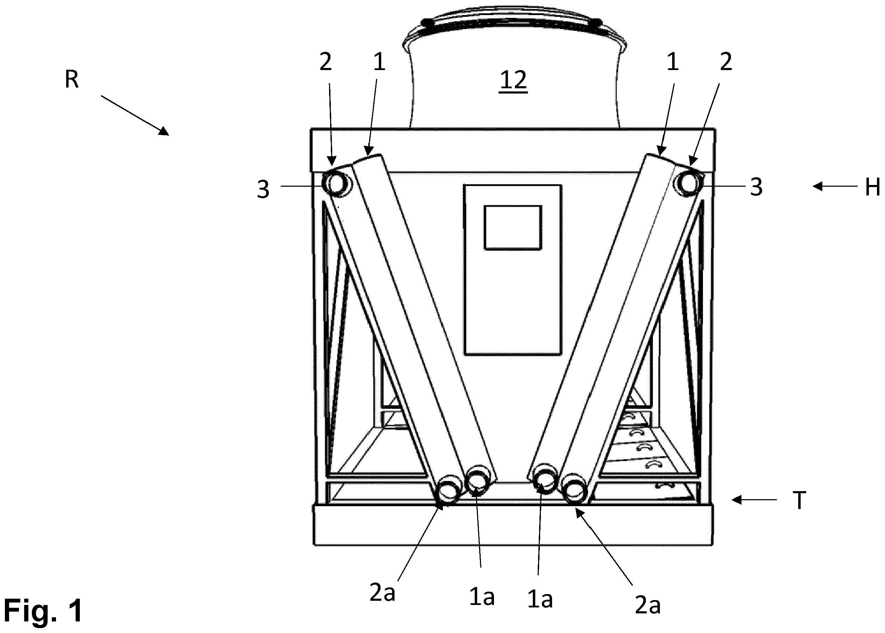

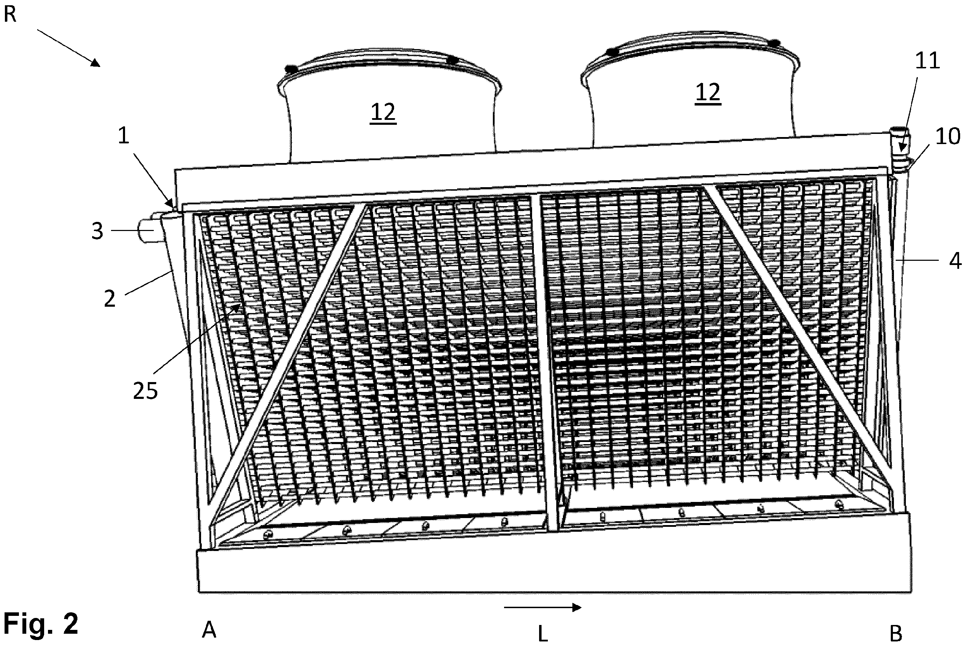

In den Figuren 1 und 2 ist ein Ausführungsbeispiel einer erfindungsgemäßen Wärmeübertrageranordnung gezeigt, die als Rückkühler R zur Kühlung eines als Wärmeträgermedium eingesetzten Fluids in einem Kühlsystem eingesetzt werden kann. Als Wärmeträgermedium kann dabei insbesondere Wasser verwendet werden. Wenn im Folgenden von Wasser gesprochen wird, ist dabei das als Wärmeträgermedium eingesetzte Fluid gemeint, wobei anstelle von Wasser auch ein anderes Fluid als Wärmeträgermedium verwendet werden kann.

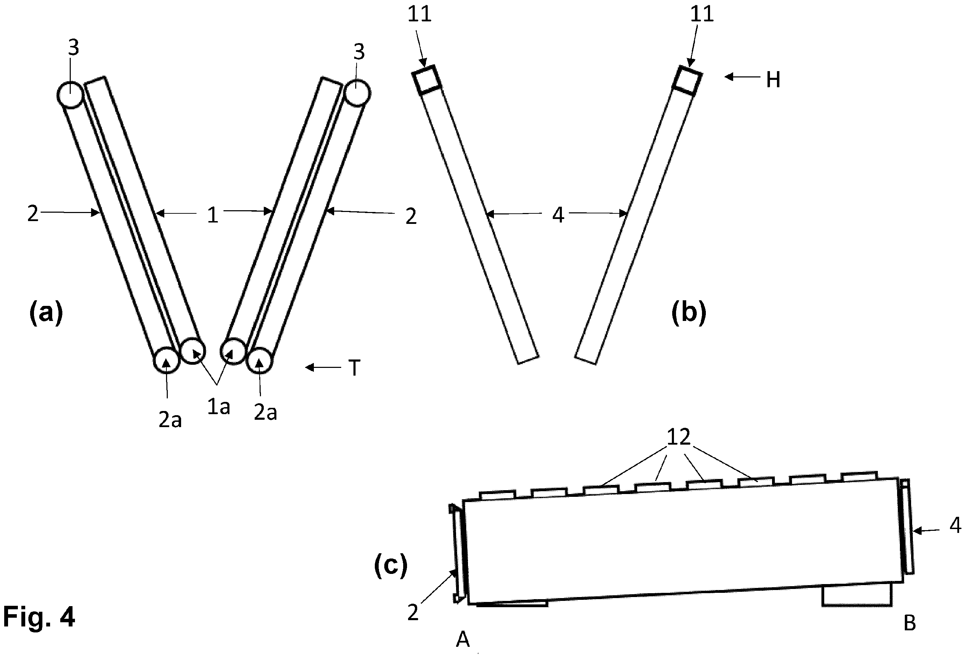

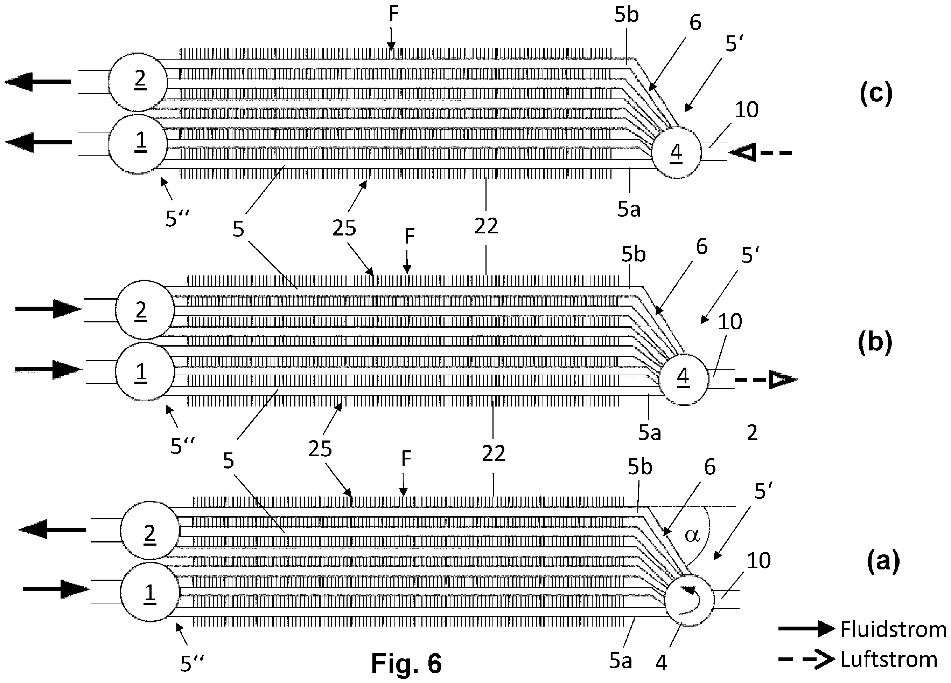

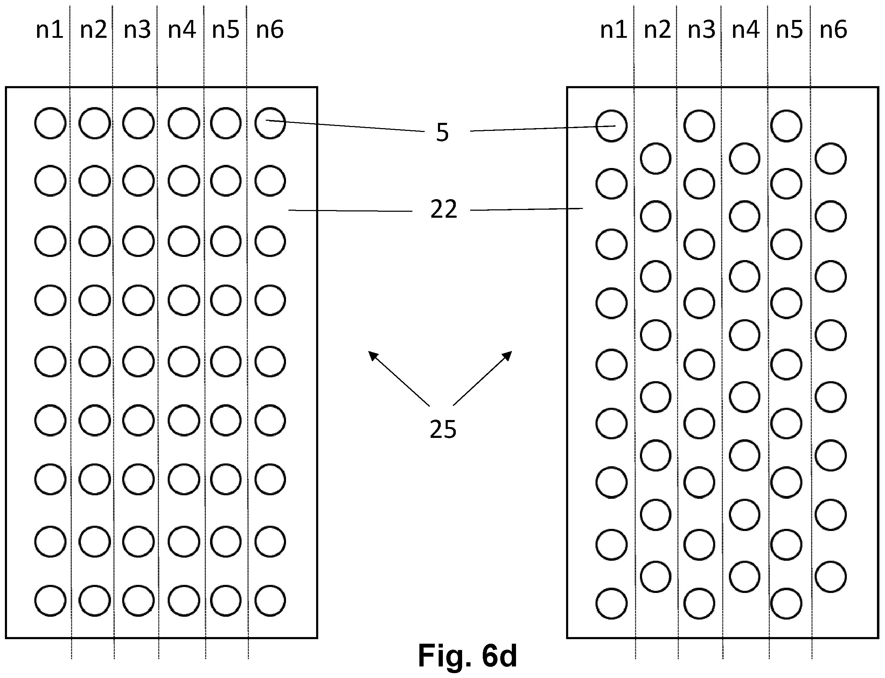

Die in den Figuren 1 und 2 dargestellte Wärmeübertrageranordnung enthält zwei 2-Pass-Wärmeübertrager, die einander gegenüberliegende, schräg zur Vertikalen verlaufende, flächige Wärmeübertrager enthält. Die beiden Wärmeübertrager sind dabei, wie aus der Ansicht von Figur 1 ersichtlich, V-förmig zueinander angeordnet. Im Folgenden wir der Aufbau des auf der linken Seite von Figur 1 angeordneten Wärmeübertragers erläutert. Der gegenüberliegende, auf der rechten Seite der Wärmeübertrageranordnung angeordnete Wärmeübertrager ist entsprechend aufgebaut. Die beiden Wärmeübertrager sind dabei an einem Gehäuse 21 der Wärmeübertrageranordnung befestigt. Jeder Wärmeübertrager umfasst einen ersten Verteiler 1, der als Eingangsverteiler ausgebildet ist, einen zweiten Verteiler 2, der als Ausgangsverteiler ausgebildet ist, sowie einen ersten Umlenkverteiler 4 und eine Mehrzahl von Rohrleitungen 5. Der erste Verteiler 1 und der zweite Verteiler 2 sind dabei an dem vorderen stirnseitigen Ende A der Wärmeübertrageranordnung angeordnet. Der Umlenkverteiler 4 ist am gegenüberliegenden Ende B der Wärmeübertrageranordnung, also an der hinteren Stirnseite, angeordnet. Die Rohrleitungen 5 erstrecken sich in einer Längsrichtung L der Wärmeübertrageranordnung von dem einen Ende A zu dem gegenüberliegenden Ende B. Die Rohrleitungen 5 sind dabei in eine erste Gruppe von Rohrleitungen 5a und eine zweite Gruppe von Rohrleitungen 5b unterteilt, wobei die erste Gruppe von Rohrleitungen 5a als Hinleitungen und die zweite Gruppe von Rohrleitungen 5b als Rückleitungen dienen. Die Rohrleitungen 5 der ersten Gruppe von Rohrleitungen 5a (Hinleitungen) verbinden den ersten Verteiler 1 (Eingangsverteiler) mit dem Umlenkverteiler 4 die Rohrleitungen 5 der zweiten Gruppe von Rohrleitungen 5b (Rückleitungen) verbinden den Umlenkverteiler 4 mit dem zweiten Verteiler 2 (Ausgangsverteiler), wie auch aus Figur 6 ersichtlich. Die Rohrleitungen 5 der Hin- und der Rückleitungen verlaufen dabei zumindest im Wesentlichen parallel zueinander und sind zur Horizontalen leicht geneigt, wie aus den Figuren 2 und 4c ersichtlich. Der Neigungswinkel der Rohrleitungen 5 zur Horizontalen liegt bevorzugt zwischen 0,5° und 5°, besonders bevorzugt zwischen 2° und 4° und in einem bevorzugten Ausführungsbeispiel beträgt der Winkel zwischen den Rohrleitungen und der horizontalen Ebene 3°.

An dem ersten Verteiler 1 (Eingangsverteiler) ist an einem tiefsten Punkt T dieses Verteilers 1 ein erster Anschlussstutzen 1a angeordnet. An entsprechender Stelle, d.h., an einem tiefsten Punkt T, ist auch an dem zweiten Verteiler 2 (Ausgangsverteiler) ein zweiter Anschlussstutzen 2a angeordnet. An dem zweiten Verteiler 2 (Ausgangsverteiler) ist an einem höchsten Punkt H ein weiterer Anschlussstutzen angeordnet, der als dritter Anschlussstutzen 3 bezeichnet wird.

Der am gegenüberliegenden Ende B der Wärmeübertrageranordnung angeordnete Umlenkverteiler 4 weist an einem höchsten Punkt H eine Lüftungsöffnung 10 auf, wie aus Figur 2 ersichtlich. Die Lüftungsöffnung 10 ist dabei zweckmäßig am oberen Ende des als rohrförmiger Mehrfachverteiler ausgebildeten Umlenkverteilers 4 angeordnet. Das gegenüberliegende untere Ende des rohrförmigen Umlenkverteilers 4 ist geschlossen. In jeder Lüftungsöffnung 10 ist zweckmäßig ein Ventil 11 angeordnet, mit dem die Lüftungsöffnung 10 geöffnet oder geschlossen werden kann. Um zu verhindern, dass bei vollständiger Befüllung der Wärmeübertrager mit dem eingefüllten Fluid das Fluid aus den Lüftungsöffnungen 10 austreten kann, ist in den Lüftungsöffnungen 10 zweckmäßig ein sich selbsttätig verschließendes Ventil 11 angeordnet. Das Ventil 11 verschließt dabei die Lüftungsöffnung 10 selbsttätig, sobald durch das eintretende Fluid ein Innendruck im Ventil entsteht.

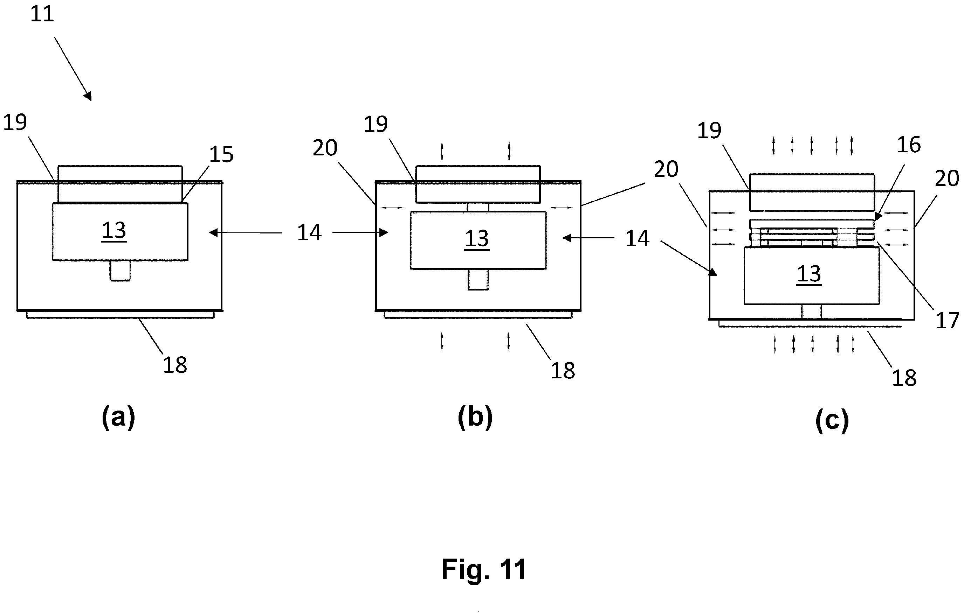

In Figur 11 ist ein mehrstufiges Ventil 11 gezeigt, das zu diesem Zweck in die Lüftungsöffnung 10 eingebaut werden kann, wobei in den Figuren 11a, 11b und 11c verschiedene Verschlußstufen des Ventils 11 gezeigt sind.

Das Ventil 11 ist dabei als sich selbsttätig verschließendes Ventil ausgebildet, das sich bei Eintritt des Fluids in das Ventil selbsttätig verschließt. Das Ventil 11 verschließt dabei erst dann vollständig, wenn der Umlenkverteiler vollständig, d.h. bis zu seinem oberen Ende, an dem sich die Lüftungsöffnung befindet, mit Fluid befüllt ist. Dies ermöglicht eine vollständige Befüllung des Wärmeübertragers, ohne dass das Fluid aus dem Wärmeübertrager herausfließen kann.

In der zeichnerisch in Figur 11 dargestellten Ausführungsform weist das Ventil 11 eine Kammer 14 und einen darin beweglich gelagerten Schwimmkörper 13 auf. Der Schwimmkörper 13 ist dabei mit einem Ventilkörper 16 gekoppelt. Am unteren Ende und am oberen Ende der Kammer ist jeweils eine Öffnung 18, 19 vorgesehen, wobei die obere Öffnung 19 durch den Schwimmkörper 13 luftdicht verschlossen werden kann, wenn der bewegliche Schwimmkörper 13 bei Eintritt einer Flüssigkeit in die Kammer 14 durch die auf den Schwimmkörper 13 wirkenden Auftriebskräfte soweit angehoben wird, dass dieser den Ventilkörper 16 gegen einen Ventilsitz 15 presst.

In dem Ventilkörper 16 ist eine Mehrzahl von Öffnungen 17 vorgesehen. Diese Öffnungen 17 stehen einerseits mit der unteren Öffnung 18 der Kammer 14 und andererseits mit seitlichen Öffnungen 20 in der Kammer 14 in Verbindung und ermöglichen dadurch einen Luftaustausch von der unteren Öffnung 18 zu den seitlichen Öffnungen 20. Die Mehrzahl der Öffnungen 17 bildet dabei einen Teil des gesamten Strömungsquerschnitts (d) des Ventils 11, der sich aus der Summe der Querschnitte aller Öffnungen 17 und dem Querschnitt der oberen Öffnung 19 in der Kammer 14 ergibt. In der in Figur 11c gezeigten geöffneten Stellung des Ventils 11 kann Luft durch die untere Öffnung 18 in die Kammer 14 einströmen und von dort sowohl aus den seitlichen Öffnungen 20 als auch durch die obere Öffnung 19 entweichen. In dieser Stellung ist der gesamte Strömungsquerschnitt (d) des Ventils 11 für den Durchtritt von Luft geöffnet.

Wenn die Flüssigkeit durch die untere Öffnung 18 in die Kammer 14 einströmt, wird der Schwimmkörper 13 angehoben. Dabei bewegt sich der Schwimmkörper 13 zunächst relativ zu dem Ventilkörper 16 und verschließt dabei - je nach Niveau der Flüssigkeit in der Kammer 14 - einen Teil der Öffnungen 17 in dem Ventilkörper (Figur 1 1b). Dadurch wird mit ansteigendem Niveau der Flüssigkeit in der Kammer der Strömungsquerschnitt des Ventils 11 teilweise verschlossen und immer weiter reduziert, bis der Schwimmkörper 13 alle Öffnungen 17 des Ventilkörpers 16 abdeckt, wie in Figur 11b gezeigt. In diesem Zustand kann überschüssige Luft, die durch die einströmende Flüssigkeit nach oben verdrängt wird, durch den noch offenen Ventilsitz 15 aus der oberen Öffnung 19 entweichen. Bei weiter ansteigendem Flüssigkeitsspiegel in der Kammer 14 wird der Ventilkörper 16 durch den Schwimmkörper 13 nach oben und gegen den Ventilsitz 15 gedrückt. In dieser Stellung des Ventils 11 ist der gesamte Strömungsquerschnitt d des Ventils 11 luftdicht verschlossen (Figur 11a).

Durch diese Ausbildung des Ventils 11 kann bei Eintritt des Fluids in die Kammer 14 des Ventils 11 der Schwimmkörper 13 das Ventil 11 stufenweise verschließen, wobei zunächst in einer Stufe je nach Niveau des in die Kammer 14 einströmenden Fluids der Strömungsquerschnitt des Ventils 11 zunächst nur teilweise verschlossen wird und erst bei Erreichen eines vorgegebenen Niveau-Grenzwerts in einer zweiten Stufe der Strömungsquerschnitt d des Ventils 11 vollständig luftdicht verschlossen wird. Dadurch kann beim Befüllen des Wärmeübertragers mit dem Fluid einerseits eine vollständige Entlüftung des Wärmeübertragers gewährleistet werden, solange sich noch Luft im Umlenkverteiler befindet und andererseits kann sichergestellt werden, dass das Ventil vollständig verschlossen ist, sobald der Wärmeübertrager vollständig mit dem Fluid befüllt ist.

Zumindest in dem zweiten Anschlussstutzen 2a, der am unteren Ende des zweiten Verteilers 2 (Ausgangsverteiler) angeordnet ist, ist ein weiteres (hier nicht zeichnerisch dargestelltes) Ventil zum Öffnen und Schließen des Anschlussstutzens 2a eingesetzt. Dieses Ventil, das von einer Steuereinrichtung ansteuerbar ist, kann alternativ auch an einer anderen Stelle platziert sein, bspw. in einer mit dem zweiten Anschlussstutzen 2a in Verbindung stehenden Fluidleitung.

In Figur 4 sind in einer Übersichts-Darstellung des Ausführungsbeispiels der erfindungsgemäßen Wärmeübertrageranordnung die vordere Stirnseite der der 2-pass-Wärmeübertrageranordnung (Figur 4a), die hintere Stirnseite (Figur 4b) und eine Seitenansicht (Figur 4c) schematisch dargestellt. Aus Figur 4 geht insbesondere die Platzierung der Anschlussstutzen 1a, 2a und 3 am ersten und am zweiten Verteiler 1, 2 (Figur 4a) sowie die Neigung der Anordnung und damit der in Längsrichtung L verlaufenden Rohrleitungen 5 zum vorderen Ende A hin hervor (Figur 4c).

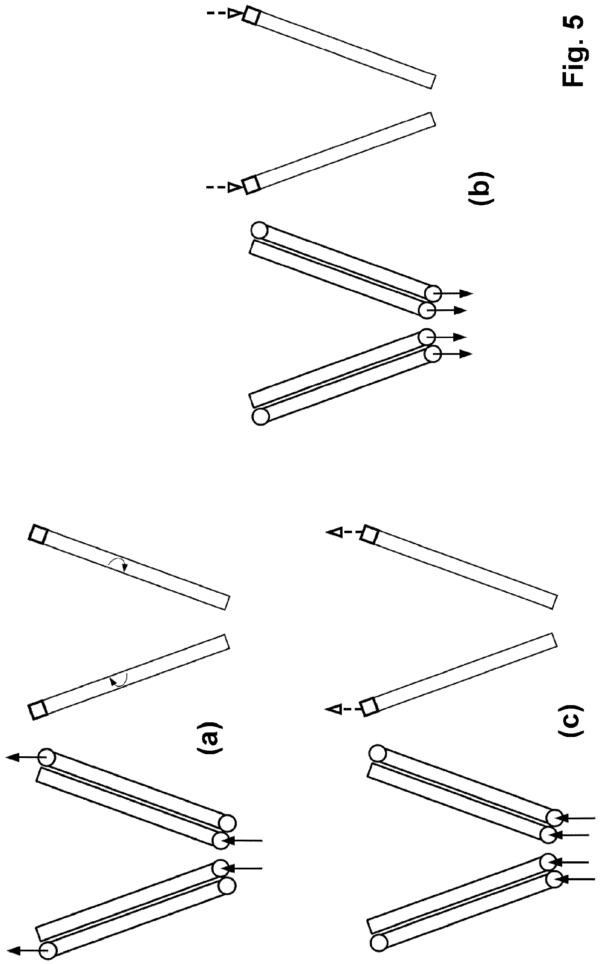

Aus den Figuren 5 und 6 gehen verschiedene Betriebsmodi der Wärmeübertrageranordnung hervor. In dem in den Figuren 5a und 6a gezeigten Rückkühlbetrieb wird bspw. Wasser als Wärmeträgermedium durch die Rohrleitungen 5 (Hinleitungen 5a und Rückleitungen 5b) der Wärmeübertrageranordnung geleitet. Gleichzeitig wird von wenigstens einem Ventilator 12, der an der Oberseite der Wärmeübertrageranordnung angeordnet ist, wie aus den Figuren 2 und 4c ersichtlich, (kalte) Umgebungsluft aus der Umgebung angesaugt und durch die Wärmeübertrager der Wärmeübertrageranordnung geleitet, um einen Wärmeaustausch zwischen dem durch die Rohrleitungen 5 geleiteten Wärmeträgermedium (Wasser) und der angesaugten Luft vorzunehmen. Zur Erhöhung der Wärmeübertragungseffizienz sind an den Rohrleitungen 5 Lamellen 22 befestigt, wie aus Figur 6 zu erkennen, um die effektive Wärmeübertragungsfläche zu erhöhen. In dem gezeigten Ausführungsbeispiel handelt es sich bei den Wärmeübertragern dementsprechend um Lamellen- bzw. Rippenrohr-Wärmeübertrager. Anstelle herkömmlicher Lamellen- bzw. Rippenrohr-Wärmeübertrager können auch Mikrokanal-Wärmeübertrager in der erfindungsgemäßen Wärmeübertrageranordnung eingesetzt werden.

In dem in den Figuren 5a und 6a schematisch dargestellten Rückkühlbetrieb wird das als Wärmeträgermedium eingesetzten Fluid über den ersten Anschlussstutzen 1a in den ersten Verteiler 1 (Eingangsverteiler) eingeleitet und von dort durch die Rohrleitungen 5 der ersten Gruppe von Rohrleitungen 5a (Hinleitungen) zum Umlenkverteiler 4 geleitet und darin in die Rohrleitungen der zweiten Gruppe von Rohrleitungen 5a (Rückleitungen) umgelenkt. Das Fluid strömt durch die Rückleitungen bis zu zweiten Verteiler 2 (Ausgangsverteiler). Das Fluid wird von dem Ausgangsverteiler 2 durch den am oberen Ende des Ausgangsverteilers 2 angeordneten dritten Anschlussstutzen 3 entnommen und über eine an den dritten Anschlussstutzen 3 angeschlossene Fluidleitung 9 als Kühlmedium in ein Kühlmediumreservoir (Behälter B) oder direkt zu einem zu kühlenden Verbraucher geführt.

In dem Rückkühlbetrieb gemäß den Figuren 5a und 6a ist der zweite Anschlussstutzen 2a durch das darin angeordnete Ventil verschlossen.

In den Figuren 5b und 6b ist die Wärmeübertrageranordnung schematisch in einem Befüllungsbetrieb gezeigt, in dem die Wärmeübertrager entweder erstmalig befüllt oder nach einer Entleerung mit dem Fluid wieder befüllt werden kann. In dem Befüllungsbetrieb ist der untere Anschlussstutzen 2a (zweiter Anschlussstutzen) des zweiten Verteilers 2 geöffnet. Dadurch kann das Fluid gleichzeitig über die jeweils am unteren Ende der beiden Verteiler 1, 2 angeordneten Anschlussstutzen 1a, 2a in den ersten und den zweiten Verteiler 1, 2 eingefüllt werden. Das Fluid strömt anschließend, wie in den Figuren 5b und 6b dargestellt, gleichzeitig durch alle Rohrleitungen 5 (also sowohl durch die Hinleitungen 5a als auch durch die Rückleitungen 5b) in derselben Strömungsrichtung von dem einen Ende A der Wärmeübertrageranordnung zu dem gegenüberliegenden Ende B. Aufgrund der Neigung der Rohrleitungen 5 zu dem vorderen Ende A hin strömt das Fluid in den Rohrleitungen 5 dabei entgegen der Schwerkraft nach oben in Richtung des am hinteren stirnseitigen Ende B angeordneten Umlenkverteilers 4. Dabei wird die sich in dem Umlenkverteiler 4 befindliche Luft durch die Lüftungsöffnung 10 am oberen Ende des Umlenkverteilers 4 herausgedrückt, wodurch der Umlenkverteiler 4 entlüftet wird. Um zu verhindern, dass bei vollständiger Befüllung der Wärmeübertrager mit dem eingefüllten Fluid das Fluid aus der Lüftungsöffnung 10 austreten kann, ist in der Lüftungsöffnung 10 zweckmäßig ein sich selbsttätig verschließendes Ventil 11 angeordnet. Das Ventil 11 verschließt dabei die Lüftungsöffnung 10 selbsttätig, sobald durch das eintretende Fluid ein Innendruck im Ventil entsteht.

Um zu ermitteln, wann die Wärmeübertrageranordnung vollständig mit Fluid befüllt ist, wird mittels eines Drucksensors (p) der hydrostatische Druck des Fluids in der Wärmeübertrageranordnung erfasst. Sobald der vom Drucksensor (p) erfasste hydrostatische Druck einen vorgegebenen Druckgrenzwert übersteigt, wird die Wärmeübertrageranordnung vom Befüllungsbetrieb auf den Rückkühlbetrieb umgestellt. Alternativ dazu kann auch durch die Steuereinrichtung S der Wärmeübertrageranordnung aus deren Parametern eine voraussichtliche Befüllzeit berechnet und der Befüllungsbetrieb beendet werden, sobald die berechnete Befüllzeit unter Befüllung der Wärmeübertrageranordnung mit dem Fluid abgelaufen ist.

Entsprechend der Befüllung der Wärmeübertrageranordnung mit dem Fluid kann umgekehrt durch Öffnen des Ventils in bzw. am zweiten Anschlussstutzen 2a auch eine schnelle Entleerung der Wärmeübertrageranordnung erfolgen. In den Figuren 5c und 6c ist ein Entleerungsbetrieb der Wärmeübertrageranordnung gezeigt, in dem bei geöffnetem Ventil im zweiten Anschlussstutzen 2a das Fluid gleichzeitig aus allen Rohrleitungen 5 (also sowohl aus den Hinleitungen 5a als auch aus den Rückleitungen 5b) schwerkraftbedingt und in derselben Strömungsrichtung entlang des Gefälles der Rohrleitungen 5 vom hinteren Ende B zum vorderen Ende A hin in den ersten und den zweiten Verteiler 1, 2 fließen kann. Der Fluss des Fluids wird dabei einerseits durch die Neigung der Rohrleitungen 5 zu dem vorderen Ende A hin und andererseits durch eine Belüftung des Umlenkverteilers 4 über die Lüftungsöffnung 10 gefördert. Zur Belüftung des Umlenkverteilers 4 wird das Ventil 11 in den Lüftungsöffnungen 10 geöffnet, so dass Umgebungsluft durch die Lüftungsöffnung 10 in den Umlenkverteiler 4 einströmen kann. Das Fluid kann schließlich durch die unteren Anschlussstutzen 1a, 2a (erster, und zweiter Anschlussstutzen) in eine hier nicht dargestellte Fluidleitung abfließen, welche mit diesen Anschlussstutzen 1a, 2a in Verbindung steht.

Durch die erfindungsgemäße Ausbildung der Wärmeübertrager kann sowohl eine schnelle Befüllung mit dem Fluid als auch (bei Frostgefahr) eine schnelle Entleerung der Wärmeübertrageranordnung erfolgen, weil das Fluid sowohl bei der Befüllung als auch bei der Entleerung gleichzeitig und jeweils in derselben Strömungsrichtung durch alle Rohrleitung 5 der Wärmeübertrageranordnung ein- bzw. ausströmen kann.

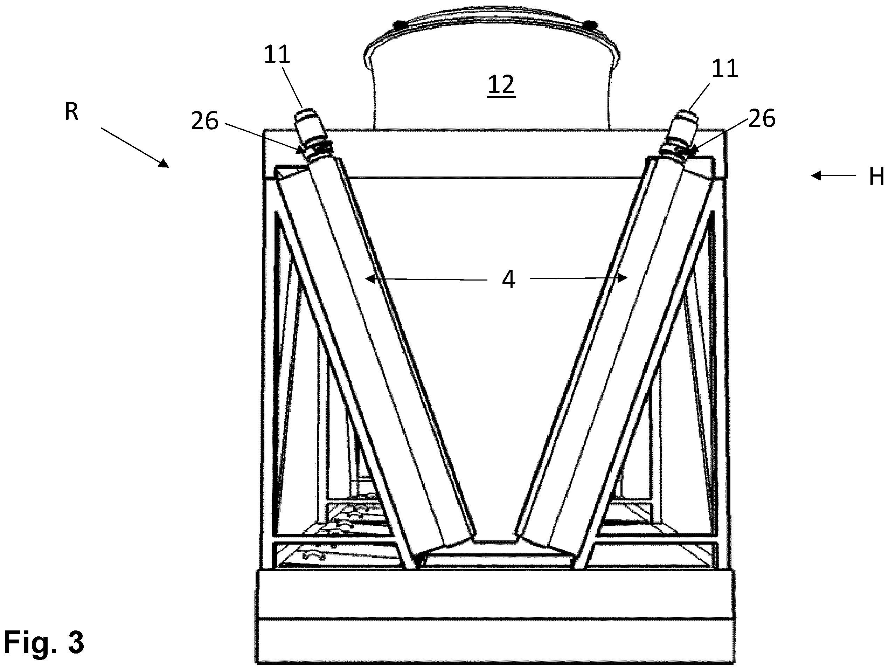

Beim Entleeren der Wärmeübertrageranordnung kann dabei eine möglichst vollständige Entleerung der Wärmeübertrager und insbesondere des Umlenkverteilers 4 durch eine Kröpfung der Rohrleitungen 5 an ihrem Rohrleitungsende, welches in den Umlenkverteiler 4 mündet, erzielt werden. Die Kröpfung der Rohrleitungen 5 an dem in den Umlenkverteiler 4 mündenden Rohrleitungsende 5' geht aus den Figuren 6a bis 6c hervor. Wie in Figur 6a bis 6c gezeigt, ist das in den Umlenkverteiler 4 mündende Rohrleitungsende 5' eines Teils der Rohrleitungen 5 in Richtung auf den Umlenkverteiler 4 hin in einem (im Vergleich zur Gesamtlänge der Rohrleitungen 5) kurzen Kröpfungsbereich 6 gekröpft. Dabei weist der Kröpfbereich von der außenliegenden Anströmfläche F weg nach innen, wie aus Figur 6a ersichtlich, in der der linke Wärmeübertrager aus der Wärmeübertrageranordnung der Figuren 1 bis 3 dargestellt ist. Der Kröpfbereich 6 weist dabei für die einzelnen Rohrleitungen 5 einen zumindest teilweise unterschiedlichen Kröpfwinkel $\alpha$ auf. Der Kröpfwinkel $\alpha$, unter dem der Kröpfbereich 6 von der Längsachse der weg gekröpft ist, liegt dabei zweckmäßig zwischen 5° und 90° und insbesondere in einem Kröpfwinkelbereich von $20° \leq \alpha \leq 70°$. Wie aus Figur 6a ersichtlich ist der Kröpfwinkel ($\alpha$) bei (in Strömungsrichtung des von der Anströmfläche F durch den Wärmeübertrager strömenden Gasstroms gesehen) innenliegenden Rohrleitungen (im dargestellten Beispiel sind dies die Hinleitungen 5a) kleiner ist als bei den weiter außenliegenden Rohrleitungen (also der Anströmfläche zugewandten Rohrleitungen, hier die Rückleitungen 5b).

Durch die Kröpfung eines Teils der Rohrleitungen 5 an ihrem dem Umlenkverteiler 4 zugewandten Rohrleitungsende 5' münden die gekröpften Rohrleitungen 5 zumindest annähernd radial in den rohrförmigen Umlenkverteiler 4. Dadurch wird ein ungehindertes Herausfließen des Fluids aus dem Umlenkverteiler 4 insbesondere bei einer Entleerung der Wärmeübertrageranordnung ermöglicht. Ein ungehindertes Abfließen des Fluids aus dem Umlenkverteiler 4 stellt einerseits ein schnelles und andererseits auch ein vollständiges Entleeren des Umlenkverteilers 4 sicher. Zu einer vollständigen Entleerung des Umlenkverteilers 4 kann dabei auch eine Schrägstellung des Rohrs des Umlenkverteilers 4 in Bezug auf die vertikale Ebene beitragen, weil in diesem Fall das Fluid behinderungsfrei aus dem schräg gestellten Umlenkverteiler 4 nach unten in den Kröpfbereich 6 der mit dem Umlenkverteiler 4 in Verbindung stehenden, gekröpften Rohrleitungen 5 abfließen kann. Durch die Schrägstellung des Umlenkverteilers 4 verläuft auch der am Rohr des Umlenkverteilers 4 befestigte Kröpfbereich 6 der gekröpften Rohrleitungen 5 schräg zur horizontalen Ebene, wodurch ein ungehinderter Fluid-Abfluss in die Rohrleitungen 5 unterstützt wird.

Das dem Kröpfbereich 6 gegenüberliegende, andere Rohrleitungsende 5" der Rohrleitungen 5, welches mit dem ersten oder dem zweiten Verteiler 1, 2 in Verbindung steht, mündet zweckmäßig gerade (d.h. ohne Kröpfung) entweder zentral auf die Mittellängsachse des jeweiligen Verteilers 1, 2 (und damit radial in den Verteiler) oder versetzt zur Mittellängsachse (und damit tangential) in den jeweiligen Verteiler 1, 2 ein, wie in Figur 6a gezeigt.

Figur 6d zeigt eine Schnittzeichnung durch die Rohrleitungsanordnung 25 der Wärmeübertrageranordnung in einer senkrecht zu den Rohrleitungen 5 stehenden Schnittebene. Wie aus Figur 6d ersichtlich, sind die Rohrleitungen 5 der Rohrleitungsanordnung 25 spaltenweise angeordnet. In dem linken Teil der Figur 6d ist eine erste mögliche Anordnung der Rohrleitungen 5 der Rohrleitungsanordnung 25 in einer Matrixform (d.h. mit parallel zueinander verlaufenden Rohrleitungsreihen und Spalten n1, n2, n3, n4, n5, n6) gezeigt und der rechte Teil der Figur 6d zeigt eine zweite mögliche Anordnung, in der die Rohrleitungen der Rohrleitungsreihen (in jeder zweiten Spalte, n2, n4, n6) versetzt angeordnet sind. In beiden Anordnungen beträgt die Anzahl der Spalten (n1 bis n6) n = 6. Aus der Anzahl n der Spalten (n1 bis n6) in der Rohrleitungsanordnung 25 ergibt sich der Mindestquerschnitt ($D_{min}$) durch das Produkt der Anzahl n von Spalten in der Rohrleitungsanordnung und dem Rohrquerschnitt ($A_R$) der Rohrleitungen 5:

$$D_{min} = n\, A_R \,.$$

Der Rohrquerschnitt ($A_U$) des Umlenkverteilers 4 und der Strömungsquerschnitt (d) des Ventils 11 werden dabei gemäß der Erfindung so gewählt, dass sowohl der Rohrquerschnitt ($A_U$) des Umlenkverteilers 4 als auch der Strömungsquerschnitt (d) des Ventils 11 gleich oder größer als der Mindestquerschnitt ($D_{min}$) sind, d.h.:

$$A_U \geq D_{min} \,,$$

und

$$d \geq D_{min.}$$

Der Innendurchmesser der Rohrleitungen 5 kann bspw. bei 15 mm liegen, woraus sich ein Rohrquerschnitt von $A_R$ = 1,7671 cm$^2$ ergibt. Bevorzugt liegt n zwischen 4 und 10 und besonders bevorzugt zwischen 5 und 7. Daraus ergibt sich ein bevorzugter Mindestquerschnitt ($D_{min}$) von ca. 7 bis bis 18 cm$^2$ und insbesondere zwischen 9 und 12 cm$^2$.

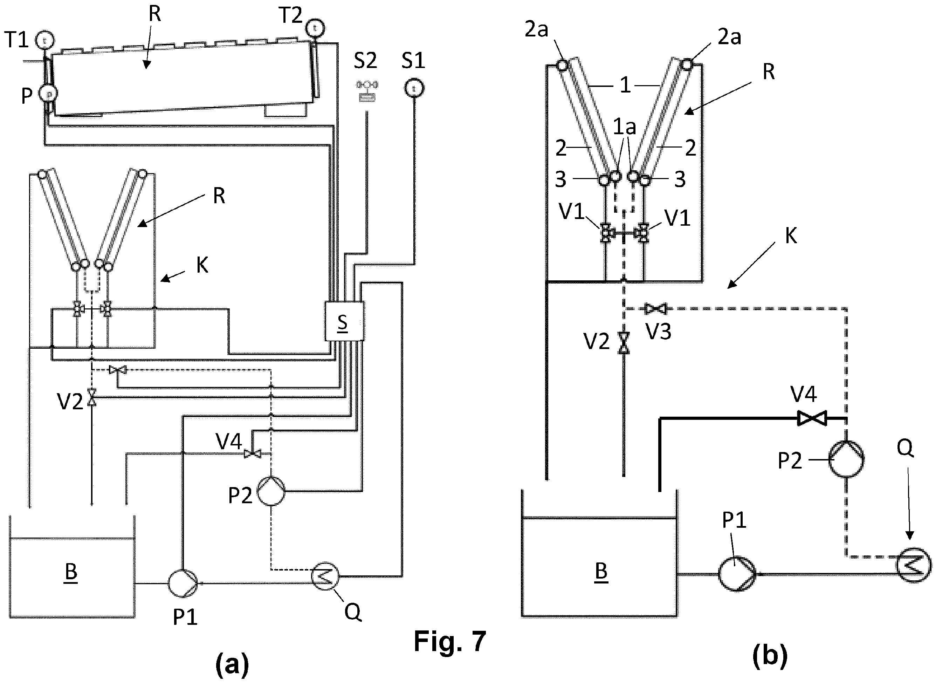

In Figur 7 ist beispielhaft ein Kühlsystem dargestellt, in dem eine erfindungsgemäße Wärmeübertrageranordnung eingesetzt werden kann. Das in Figur 7 schematisch gezeigte Kühlsystem umfasst einen Kreislauf K, in dem ein Fluid, insbesondere Wasser, als Wärmeträgermedium geführt wird, einen mit dem Kreislauf K in Verbindung stehenden Behälter B, in dem das Fluid bevorratet ist, eine Wärmequelle Q, welche dem Fluid am Ort der Wärmequelle Wärme zuführt, sowie mindestens eine erfindungsgemäße Wärmeübertrageranordnung, die in dem Kühlsystem als Rückkühler R eingesetzt wird, um das Fluid durch Wärmeaustausch mit der Umgebungsluft zu kühlen. In dem in Figur 7 gezeigten Beispiel wird die Wärmeübertrageranordnung mit zwei 2-pass-Wärmeübertragern gemäß den Figuren 1 bis 3 als Rückkühler R eingesetzt.

Der Rückkühler R des Kühlsystems steht dabei über Fluidleitungen 9 mit dem Behälter B in Verbindung. Der Behälter B ist bevorzugt zur Umgebung des Behälterstandorts offen. Vom Behälter B führt eine Fluidleitung 19 zur Wärmequelle Q, um das im Behälter B bevorratete und gekühlte Fluid als Kühlmedium zur Wärmquelle Q zu führen. Zur Förderung des Fluids vom Behälter B zur Wärmequelle Q ist eine erste Pumpe P1 vorgesehen. Am Ort der Wärmequelle Q wird das Fluid durch Wärmeaustausch erwärmt und durch eine weitere Leitung 29 zurück zum Rückkühler R geleitet. Zweckmäßig ist in der Leitung 29 eine zweite Pumpe P2 angeordnet, welche das Fluid von der Wärmequelle Q zurück zum Rückkühler R fördert. Von der Leitung 29 zweigt eine Abzweigleitung 30 in den Behälter B ab. Zum Öffnen und Verschließen der Abzweigleitung 30 ist ein Ventil V4 vorgesehen. Ein weiteres Ventil V3 ist stromabwärts der Abzweigleitung 30 in der Leitung 29 angeordnet. Die Leitung 29 verzweigt sich an einer Zweigstelle Z in eine Rückführleitung 31 zum Behälter B und in eine zum Rückkühler R führende Zufuhrleitung 32. In der Rückführleitung 31 ist zum Öffnen und Schließen dieser Leitung ein weiteres Ventil V2 angeordnet. Die Zufuhrleitung 32 verzweigt sich in eine zentrale Zufuhrleitung und zwei Nebenleitungen, in denen jeweils ein Dreiwegeventil V1 angeordnet ist. Die zentrale Zufuhrleitung verzweigt sich dabei erneut in zwei Zweige, wobei ein erster Zweig mit dem ersten Anschlussstutzen 1a des linken Wärmeübertragers und ein zweiter Zweig mit dem ersten Anschlussstutzen 1a des rechten Wärmeübertragers in Verbindung steht. Die Nebenleitungen führen zu dem zweiten Anschlussstutzen 2a des linken und des rechten Wärmeübertragers, wie aus Figur 7b ersichtlich. Die Zufuhrleitung 32 steht somit über die Dreiwegeventile V1 mit den unteren Anschlussstutzen 1a und 2a der Wärmeübertrageranordnung in Verbindung. An den (oberen) dritten Anschlussstutzen 3 der Wärmeübertrageranordnung ist eine Abfuhrleitung 33 angeschlossen, welche zur Leitung 9 führt und mit dieser in Verbindung steht.

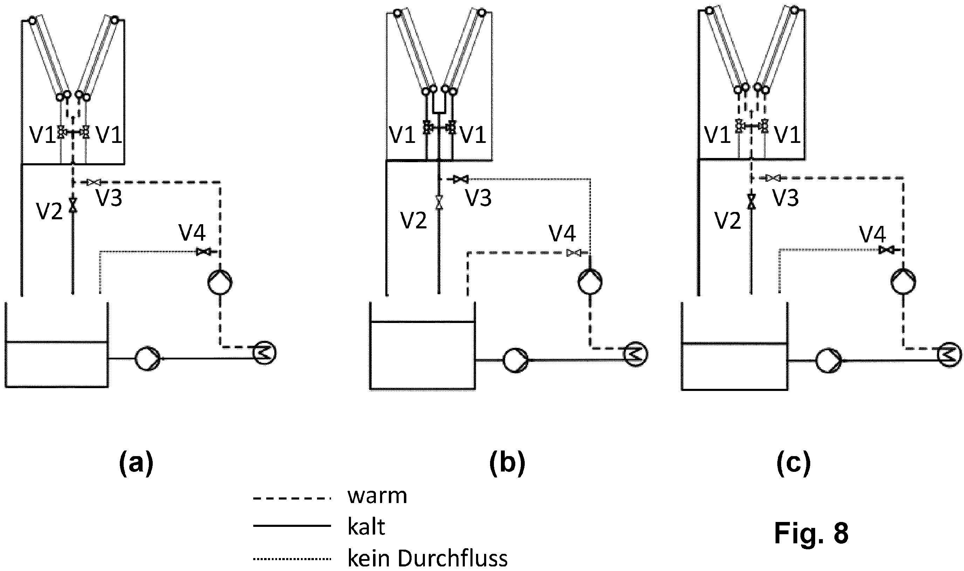

Aus Figur 8 gehen verschiedene Betriebsmodi der Wärmeübertrageranordnung in dem Kühlsystem von Figur 7 hervor. Dabei ist das Fluid im warmen Zustand gestrichelt und im kalten Zustand mit einer durchgezogenen Linie gekennzeichnet. Bei einer gepunkteten Linie erfolgt kein Fluidfluss.

In Figur 8a ist das Kühlsystem von Figur 7 im Rückkühlbetrieb gezeigt. Dabei sind die Ventile V2 und V4 geschlossen, so dass die Leitungen 30 und 31 verschlossen sind. Das Ventil V3 ist geöffnet, so dass das von der Wärmequelle Q erwärmte Fluid durch die Leitungen 29 und 32 zum Rückkühler R strömen kann. Die Dreiwegeventile V1 sind dabei geschlossen, so dass das Fluid von der Leitung 32 jeweils zum ersten Anschlussstutzen 1a des ersten Verteilers 1 (Eingangsverteiler) der beiden Mehrpass-Wärmeübertrager strömen und dadurch in die Wärmeübertrageranordnung eintreten kann. Nach mehrfachem Durchlauf des Fluids durch die Mehrpass-Wärmeübertrager des Rückkühlers R verlässt das gekühlte Fluid den Rückkühler R am dritten Anschlussstutzen 3 und strömt durch die an dem dritten Anschlussstutzen 3 angeschlossene Leitung 33 zur Leitung 9 und von dort in den Behälter B, in dem das gekühlte Fluid bevorratet wird.

In dem in Figur 8b gezeigten Entleerungsbetrieb sind die Ventile V2 und V4 geöffnet und Ventil V3 ist geschlossen. Die Dreiwegeventile V1 sind so geschalten, dass das Fluid von den unteren Anschlussstutzen 1a, 2a (erster und zweiter Anschlussstutzen) in die an diesen Anschlussstutzen angeschlossene Fluidleitung 9 und von dort direkt in den Behälter B fließen kann. Während des Entleerens des Rückkühlers R wird das von der Wärmequelle Q erwärmte Fluid über die Abzweigleitung 30 bei geöffnetem Ventil V4 in den Behälter B zurückgeleitet, ohne dass das Fluid durch den Rückkühler R geführt wird.

In dem in Figur 8c gezeigten Befüllungsbetrieb sind die Ventile V2 und V4 geschlossen und das Ventil V3 ist offen. Die Dreiwegeventile V1 sind dabei so angesteuert, dass das von der Wärmequelle Q erwärmte Fluid über die Leitungen 29 und 32 zu den unteren Anschlussstutzen 1a, 2a (erster und zweiter Anschlussstutzen) der Mehrpass-Wärmeübertrager geleitet wird und von dort in den Rückkühler R eintritt. Nach vollständiger Befüllung der Wärmeübertrager des Rückkühlers R wird der Rückkühler in den Rückkühlbetrieb (Figur 8a) umgeschaltet.

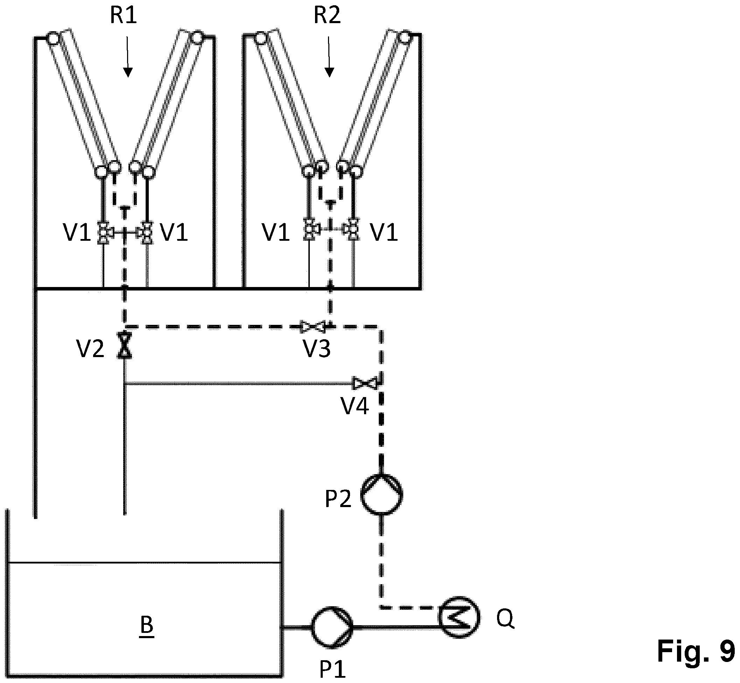

In Figur 9 ist ein Ausführungsbeispiel eines Kühlsystems gezeigt, in dem zwei erfindungsgemäße Wärmeübertrageranordnungen als Rückkühler R1, R2 im Parallel- oder Serienbetrieb eingesetzt werden können. Die beiden Rückkühler R1, R2 können dabei bspw. in Reihe oder parallel geschaltet gleichzeitig zum Kühlen des als Wärmeträgermedium in dem Kühlsystem verwendeten Fluids verwendet werden. Bei gleichzeitigem Einsatz beider Rückkühler R1, R2 wird eine maximale Kühlleistung des Kühlsystems erzielt. Wenn eine geringere Kühlleistung für eine ausreichende Kühlung des Fluids benötigt wird, kann einer der beiden Rückkühler R1 oder R2 durch die Steuereinrichtung S des Kühlsystems abgestellt werden.

Im Parallelbetrieb, in dem beide Rückkühler R1, R2 gleichzeitig zur Kühlung des Fluids betrieben werden, sind die Ventile V2 und V4 geschlossen und das Ventil V3 ist offen, so dass das von der Wärmequelle Q erwärmte Fluid in die beiden Rückkühler R1, R2 jeweils durch den ersten Anschlussstutzen 1a eingeleitet werden kann. Das in den Rückkühlern R1, R2 gekühlte Fluid verlässt die Rückkühler R1, R2 jeweils an dem dritten Anschlussstutzen 3 und strömt durch die mit dem dritten Anschlussstutzen 2a verbundene Fluidleitung 9 in den Behälter B (wie in Figur 9 gezeigt).

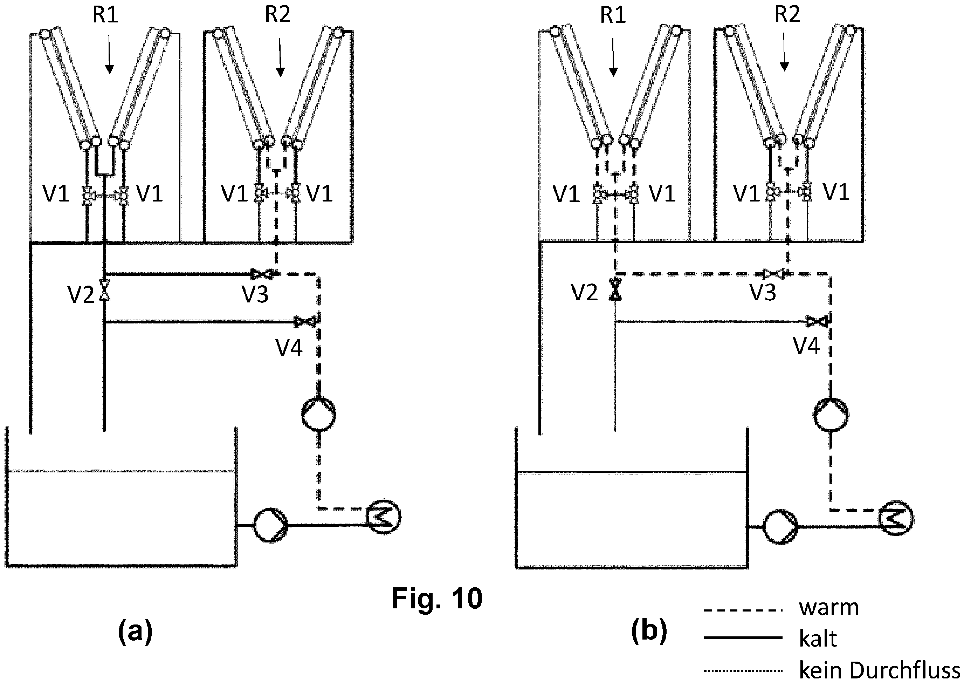

In dem in Figur 10a gezeigten Betriebsmodus des Kühlsystems von Figur 9 sind die Ventile V3 und V4 geschlossen und Ventil V2 ist offen. Dadurch wird nur der zweite Rückkühler R2 im Rückkühlbetrieb betrieben. Der erste Rückkühler R1 befindet sich in einem Standby-Betrieb, in dem kein Fluid durch die Rohrleitungen des ersten Rückkühlers R1 geleitet wird.

In dem in Figur 10b gezeigten Betriebsmodus wird der zweite Rückkühler R2 bei geöffnetem Ventil V3 und geschlossenen Ventilen V2 und V4 im Rückkühlbetrieb betrieben, in dem das von der Wärmequelle Q erwärmte Fluid über den ersten Anschlussstutzen 1a in die Wärmeübertrager des zweiten Rückkühlers R2 eingeführt und dort gekühlt und schließlich durch den zweiten Anschlussstutzen 2a aus dem zweiten Rückkühler R2 über die an den dritten Anschlussstutzen 3 angeschlossene Fluidleitung 9 herausgeführt und in den Behälter B geleitet wird. Gleichzeitig dazu wird der erste Rückkühler R1 im Befüllungsbetrieb betrieben, in dem das Fluid über den ersten Anschlussstutzen 1a und den zweiten Anschlussstutzen 2a der Wärmeübertrager gleichzeitig in alle Rohrleitungen 5 des ersten Rückkühlers R1 eingeführt wird, um den Rückkühler R1 vollständig mit Fluid zu füllen.

Zur Steuerung der erfindungsgemäßen Wärmeübertrageranordnung in den verschiedenen Betriebsmodi wird zweckmäßig eine Mehrzahl von Sensoren S1, S2 verwendet, mit denen Umgebungsparametern, wie die Außentemperatur ($T_U$) und/oder die Windgeschwindigkeit (v) erfasst und zur Verarbeitung an eine Steuereinrichtung S geleitet werden können. Neben den Umgebungsparametern werden zweckmäßig über weitere Sensoren T1, T2, P die Eingangstemperatur ($T_{ein}$) des Fluids beim Eintritt in die Wärmeübertrageranordnung, die Temperatur des Fluids in den Umlenkverteilern 4, 6 sowie der Druck oder die Durchflussmenge des Fluids beim Eintritt in den Eingangsverteiler 1 erfasst.

Die in dem Schema des Kühlsystems von Figur 7a mit Bezugszeichen S bezeichnete Steuereinrichtung ist an die Ventile V, V1, V2, V3 und V4 gekoppelt um diese zu steuern. Die von den Sensoren S1, S2; T1, T2, P erfassten Messwerte werden an die Steuereinrichtung geleitet und die Steuereinrichtung berechnet auf Basis der erfassten Messwerte eine Austrittstemperatur ($T_{aus}$) des Fluids beim Austritt aus der Wärmeübertrageranordnung. Bei der Berechnung des Werts der Austrittstemperatur ($T_{aus}$) werden auch die Parameter der Wärmeübertrageranordnung, insbesondere deren thermische Leistung, die Dimensionierung der Wärmeübertrager, die Anzahl der Durchläufe des Fluids durch die Rohrleitungen, das als Wärmeträgermedium verwendete Fluid und der Volumenstrom des Fluids durch die Rohrleitungen, berücksichtigt, um eine (maximale) Abkühlung des Fluids beim Entleeren der Wärmeübertrageranordnung zu ermitteln. Die Steuereinrichtung steuert die Ventile der Wärmeübertrageranordnung so an, dass die Wärmeübertrageranordnung im Rückkühlbetrieb betrieben wird, solange die berechnete Austrittstemperatur ($T_{aus}$) größer oder gleich einem vorgegebenen Grenzwert ($T_{min}$) ist. Sobald die berechnete Austrittstemperatur ($T_{aus}$) den Grenzwert unterschreitet (also bei $T_{aus} < T_{min}$), wird die Wärmeübertrageranordnung in den Entleerungsbetrieb umgeschaltet. Das Umschalten erfolgt dabei bspw. durch elektrisches oder pneumatisches Ansteuern der Ventile V, V1, V2, V3 und V4.

Der vorgegebene Grenzwert ($T_{min}$) liegt dabei zweckmäßig um einen Wert $\Delta$ oberhalb des Gefrierpunkts des als Wärmeträgermedium verwendeten Fluids (bei Wasser also oberhalb von 0°C), wobei der Wert $\Delta$ einen Sicherheitsabstand vom Gefrierpunkt darstellt..

So ist selbst bei einer schnellen Entleerung gewährleistet, dass das Fluid bei Frostgefahr nicht einfriert. Bevorzugt liegt der Wert $\Delta$ (und damit bei Verwendung von Wasser als Wärmeträgermedium der Grenzwert $T_{min}$ = 0°C + $\Delta$ ) zwischen 1°C und 7°C.

Nach vollständiger Entleerung wird die Wärmeübertrageranordnung in einem stand-by-Betrieb belassen, in dem die Wärmeübertrager nicht mit Fluid gefüllt sind. In dem stand-by-Betrieb wird überwacht, ob die Frostgefahr beseitigt ist oder weiterhin vorliegt, indem anhand der erfassten Umgebungsparameter die progonistizierte Austrittstemperatur ($T_{aus}$) berechnet und mit dem Grenzwert verglichen wird. Sobald die berechnete Austrittstemperatur ($T_{aus}$) größer oder gleich dem vorgegebenen Grenzwert ($T_{min}$) ist, schaltet die Steuereinrichtung die Wärmeübertrageranordnung aus dem stand-by in den Befüllungsbetrieb um. Nach vollständiger Befüllung der Wärmeübertrageranordnung wird diese in den Rückkühlbetrieb geschaltet und solange betrieben, bis die berechnete Austrittstemperatur ($T_{aus}$) unterhalb des Grenzwerts liegt.

In dem Ausführungsbeispiel der Figur 9 wird die eine Mehrzahl von Wärmeübertragern umfassende Wärmeübertrageranordnung von der Steuereinrichtung so angesteuert, dass die einzelnen Mehrpass- Wärmeübertrager unabhängig voneinander in den verschiedenen Betriebsmodi betrieben werden können. Dabei steuert die Steuereinrichtung die Anzahl der im Rückkühlbetrieb betriebenen Wärmeübertrager in Abhängigkeit der erfassten Umgebungsparameter und/oder der erfassten Eingangstemperatur ($T_{ein}$) des Fluids, um eine erforderliche Kühlleistung bereit stellen zu können. Das pro Zeiteinheit durch die Wärmeübertrageranordnung geleitete Fluidvolumen bleibt zweckmäßig unabhängig von der Anzahl der im Rückkühlbetrieb betriebenen Wärmeübertrager gleich. Dabei überwacht die Steuereinrichtung, ob die Temperatur des in der Wärmeübertrageranordnung gekühlten und in dem Behälter bevorrateten Fluids in einem bevorzugten Temperaturbereich zwischen einer Minimal- und einer Maximaltemperatur liegt. Der bevorzugte Temperaturbereich des im Behälter B bevorrateten Fluids kann bspw. zwischen 15°C und 22°C liegen.

**Patentansprüche**

1. Wärmeübertrageranordnung mit wenigstens einem Mehrpass-Wärmeübertrager, welcher einen ersten Verteiler (1), einen zweiten Verteiler (2) und wenigstens einen rohrförmig ausgebildeten Umlenkverteiler (4) mit einem vorgegebenen Rohrquerschnitt ($A_U$) sowie eine Rohrleitungsanordnung (25) mit einer Mehrzahl von zumindest im Wesentlichen parallel zueinander verlaufenden Rohrleitungen (5) mit einem vorgegebenen Rohrquerschnitt ($A_R$) umfasst, welche von einem Fluid, insbesondere Wasser, durchströmbar sind und in der Rohrleitungsanordnung (25) spaltenweise mit einer vorgegebenen Anzahl von Spalten (n) angeordnet sind, wobei der erste Verteiler (1) und der zweite Verteiler (2) an einem Ende (A) der Wärmeübertrageranordnung angeordnet sind und der Umlenkverteiler (4) am gegenüberliegenden Ende (B) angeordnet ist und die Rohrleitungen (5) sich von dem einen Ende (A) zum gegenüberliegenden Ende (B) erstrecken und mit dem Umlenkverteiler (4) sowie dem ersten oder dem zweiten Verteiler (1, 2) in Verbindung stehen und an einem höchsten Punkt (T) oder zumindest in der Nähe des höchsten Punkts (T) des Umlenkverteilers (4) wenigstens eine Lüftungsöffnung (10) zum Druckausgleich mit der Umgebung angeordnet ist, **dadurch gekennzeichnet, dass**

   a) in der wenigstens einen Lüftungsöffnung (10) ein Ventil (11) angeordnet ist, das geöffnet und geschlossen werden kann, wobei bei vollständiger Öffnung des Ventils (11) ein Strömungsquerschnitt (d) zum Durchtritt von Luft frei gegeben ist,

b) der Rohrquerschnitt ($A_U$) des Umlenkverteilers (4) und der Strömungsquerschnitt (d) des Ventils (11) gleich oder größer als ein Mindestquerschnitt ($D_{min}$) ist,

c) wobei sich der Mindestquerschnitt ($D_{min}$) aus dem Produkt der Anzahl von Spalten in der Rohrleitungsanordnung (25) und dem Rohrquerschnitt ($A_R$) der Rohrleitungen ($D_{min} = n \cdot A_R$) berechnet.

2. Wärmeübertrageranordnung nach Anspruch 1, **dadurch gekennzeichnet, dass** das Ventil (11) bei Eintritt des Fluids in das Ventil die Lüftungsöffnung (10) selbsttätig verschließt.

3. Wärmeübertrageranordnung nach Anspruch 1 oder 2, **dadurch gekennzeichnet, dass** das Ventil (11) hydraulisch, pneumatisch oder elektrisch ansteuerbar ist oder dass das Ventil (11) bei Eintritt des Fluids in das Ventil (11) mechanisch verschließt.

4. Wärmeübertrageranordnung nach Anspruch 3, **dadurch gekennzeichnet, dass** das Ventil (11) hydraulisch, pneumatisch oder elektrisch angesteuert ist, wobei ein Steuersignal das Ventil (11) in Abhängigkeit einer berechneten Befüllzeit oder eines gemesssenen hydrostatischen Drucks des Fluids in der Wärmeübertrageranordnung verschließt.

5. Wärmeübertrageranordnung nach einem der voranstehenden Ansprüche, **dadurch gekennzeichnet, dass** das Ventil (11) eine Kammer (14) und einen darin beweglich gelagerten Schwimmkörper (13) enthält, wobei bei Eintritt des Fluids in die Kammer der Schwimmkörper (13) das Ventil (11) und dadurch die Lüftungsöffnung (10) verschließt.

6. Wärmeübertrageranordnung nach einem der voranstehenden Ansprüche, **dadurch gekennzeichnet, dass** das Ventil (11) ein mehrstufiges, insbesondere ein zweistufiges, Ventil ist und eine Kammer (14) enthält, wobei bei Eintritt des Fluids in die Kammer die Lüftungsöffnung (10) stufenweise verschließt.

7. Wärmeübertrageranordnung nach einem der Ansprüche 5 bis 6, **dadurch gekennzeichnet, dass** in der Kammer (14) ein Ventilkörper (16) beweglich gelagert ist, wobei der Ventilkörper (16) bei Eintritt des Fluids in die Kammer (14) zunächst in Richtung eines Ventilsitzes (15) bewegt und schließlich gegen den Ventilsitz (15) gepresst wird.

8. Wärmeübertrageranordnung nach Anspruch 7, **dadurch gekennzeichnet, dass** der Ventilkörper (16) eine Mehrzahl von Öffnungen (17) aufweist, die einen Teil des Strömungsquerschnitts (d) des Ventils (11) ausbilden und dass der Ventilkörper (16) mit dem beweglich gelagerten Schwimmkörper (13) gekoppelt ist, welche die Öffnungen (17) bei ansteigendem Innendruck in der Kammer (14) stufenlos verschließt.

9. Wärmeübertrageranordnung nach einem der voranstehenden Ansprüche, wobei die Anzahl von Spalten (n) in der Rohrleitungsanordnung (25) zwischen 4 und 10 und bevorzugt zwischen 5 und 7 ist.

10. Wärmeübertrageranordnung nach einem der voranstehenden Ansprüche, wobei der Mindestquerschnitt ($D_{min}$) zwischen 5 und 35 $cm^2$ und insbesondere zwischen 10 und 15 $cm^2$ liegt,

11. Wärmeübertrageranordnung nach einem der voranstehenden Ansprüche, wobei der Rohrquerschnitt ($A_U$) des Umlenkverteilers (4) größer als der Strömungsquerschnitt (d) des Ventils (11) ist.

12. Wärmeübertrageranordnung nach einem der voranstehenden Ansprüche, wobei der Durchmesser ($D_U$) des Umlenkverteilers (4) zwischen 30 mm und 200 mm liegt.

13. Wärmeübertrageranordnung nach einem der voranstehenden Ansprüche, wobei an dem Umlenkverteiler (4) zusätzlich zu dem Ventil (11) ein manuell betätigbares oder ein elektrisch ansteuerbares Revisionsventil (26) angeordnet ist.

14. Wärmeübertrageranordnung nach einem der voranstehenden Ansprüche, **dadurch gekennzeichnet, dass** in einem Entleerungsbetrieb das Fluid schwerkraftbedingt aus allen Rohrleitungen (5) in den ersten Verteiler (1) und den zweiten Verteiler (2) fließt, wobei im Entleerungsbetrieb Umgebungsluft durch das geöffnete Ventil (11) in den Wärmeübertrager strömt.

15. Wärmeübertrageranordnung nach einem der voranstehenden Ansprüche, **dadurch gekennzeichnet, dass** in einem Befüllungsbetrieb das Fluid entgegen der Schwerkraft aus dem ersten Verteiler (1) und dem zweiten Verteiler (2) in die Rohrleitungen (5) fließt, wobei Luft aus dem Wärmeübertrager durch das geöffnete Ventil (11) in die Umgebung entweicht.

16. Kühlsystem umfassend

a) einen Kreislauf (K), in dem Wasser als Wärmetransportmedium geführt wird,
b) einen mit dem Kreislauf (K) in Verbindung stehenden Behälter (B), in dem das Wasser bevorratet ist,
c) eine Wärmequelle (W), welche dem Fluid am Ort der Wärmequelle Wärme zuführt,
d) und einen Rückkühler (R), in dem das Wasser durch Wärmeaustausch mit der Umgebungsluft gekühlt wird, **dadurch gekennzeichnet, dass** der Rückkühler (R) mindestens eine Wärmeübertrageranordnung (1) nach einem der vorstehenden Ansprüche enthält.

**Claims**

1. Heat exchanger arrangement with at least one multipass heat exchanger, which comprises a first distributor (1), a second distributor (2) and at least one tubular deflection distributor (4) with a predetermined pipe cross-section (Au) as well as a pipe arrangement (25) with a plurality of pipes (5) with a predetermined pipe cross-section ($A_R$) which run at least substantially parallel to one another, through which a fluid, in particular water, can flow and which are arranged in the pipe arrangement (25) in columns with a predetermined number of columns (n), the first distributor (1) and the second distributor (2) being arranged at one end (A) of the heat exchanger arrangement and the deflection distributor (4) being arranged at the opposite end (B), and the pipes (5) extending from the one end (A) to the opposite end (B) and being connected to the deflection distributor (4) and to the first or the second distributor (1, 2), wherein at least one ventilation opening (10) is arranged at a highest point (T) or at least in the vicinity of the highest point (T) of the deflection distributor (4) for pressure equalisation with the environment, **characterised in that**

   a) a valve (11) is arranged in the at least one ventilation opening (10), which valve (11) can be opened and closed, wherein a flow cross-section (d) is opened for the passage of air when the valve (11) is fully opened,
   b) the pipe cross-section (Au) of the deflection distributor (4) and the flow cross-section (d) of the valve (11) is equal to or greater than a minimum cross-section ($D_{min}$),
   c) whereby the minimum cross-section ($D_{min}$) is calculated from the product of the number of columns in the pipe arrangement (25) and the pipe cross-section ($A_R$) of the pipes ($D_{min} = n\, A_R$ ).

2. Heat exchanger arrangement according to claim 1, **characterised in that** the valve (11) automatically closes the ventilation opening (10) when the fluid enters the valve.

3. Heat exchanger arrangement according to claim 1 or 2, **characterised in that** the valve (11) is hydraulically, pneumatically or electrically controllable or that the valve (11) closes mechanically when the fluid enters the valve (11).

4. Heat exchanger arrangement according to claim 3, **characterised in that** the valve (11) is hydraulically, pneumatically or electrically controlled, wherein a control signal is closing the valve (11) in dependence on a calculated filling time or a measured hydrostatic pressure of the fluid in the heat exchanger arrangement.

5. Heat exchanger arrangement according to one of the preceding claims, **characterised in that** the valve (11) contains a chamber (14) and a float (13) movably mounted therein, wherein, on entry of the fluid into the chamber, the float (13) closes the valve (11) and thereby the ventilation opening (10).

6. Heat exchanger arrangement according to one of the preceding claims, **characterised in that** the valve (11) is a multi-stage valve, in particular a two-stage valve, and contains a chamber (14), wherein the ventilation opening (10) is closing in stages when the fluid enters the chamber.

7. Heat exchanger arrangement according to any one of claims 5 to 6, **characterised in that** a valve body (16) is movably mounted in the chamber (14), wherein the valve body (16) first is moved in the direction of a valve seat (15) when the fluid enters the chamber (14) and finally is pressed against the valve seat (15).

8. Heat exchanger arrangement according to claim 7, **characterised in that** the valve body (16) has a plurality of openings (17) which form part of the flow cross-section (d) of the valve (11), and **in that** the valve body (16) is coupled to the movably mounted float (13) which closes the openings (17) continuously as the internal pressure in the chamber (14) rises.

9. Heat exchanger arrangement according to one of the preceding claims, wherein the number of columns (n) in the pipe arrangement (25) is between 4 and 10 and preferably between 5 and 7.

10. Heat exchanger arrangement according to one of the preceding claims, wherein the minimum cross-section ($D_{min}$) is between 5 and 35 $cm^2$ and in particular between 10 and 15 $cm^2$.

11. Heat exchanger arrangement according to one of the preceding claims, wherein the pipe cross-section (Au) of the deflection distributor (4) is larger than the flow cross-section (d) of the valve (11).

12. Heat exchanger arrangement according to one of the preceding claims, wherein the diameter ($D_U$) of the deflection distributor (4) is between 30 mm and 200 mm.

13. Heat exchanger arrangement according to one of the preceding claims, wherein, in addition to the valve (11), a manually operable or an electrically controllable inspection valve (26) is arranged on the deflection distributor (4).

14. Heat exchanger arrangement according to one of the preceding claims, **characterised in that** in a draining mode the fluid flows by gravity from all pipes (5) into the first distributor (1) and the second distributor (2), wherein in the draining mode ambient air flows through the open valve (11) into the heat exchanger.

15. Heat exchanger arrangement according to one of the preceding claims, **characterised in that** in a filling mode the fluid flows against gravity from the first distributor (1) and the second distributor (2) into the pipes (5), while air is escaping from the heat exchanger through the open valve (11) into the environment.

16. Cooling system comprising

a) a circuit (K) in which water is conducted as a heat transport medium,
b) a container (B) in communication with the circuit (K), in which the water is stored,
c) a heat source (W) which supplies heat to the fluid at the location of the heat source,
d) and a dry cooler (R) in which the water is cooled by heat exchange with the ambient air, **characterised in that** the dry cooler (R) comprises at least one heat exchanger arrangement (1) according to one of the preceding claims.

**Revendications**

1. Ensemble échangeur de chaleur avec au moins un échangeur de chaleur à plusieurs passages, lequel comprend un premier distributeur (1), un deuxième distributeur (2) et au moins un distributeur à réorientation (4) réalisé de manière tubulaire avec une section transversale tubulaire ($A_U$) prédéfinie ainsi qu'un ensemble de conduites (25) avec une multitude de conduites (5) s'étendant au moins sensiblement de manière parallèle les unes par rapport aux autres, avec une section transversale tubulaire ($A_R$) prédéfinie, lesquelles peuvent être traversées par un fluide, en particulier de l'eau et sont disposées, dans l'ensemble de conduites (25), en colonnes avec un nombre prédéfini de colonnes (n), dans lequel le premier distributeur (1) et le deuxième distributeur (2) sont disposés sur une extrémité (A) de l'ensemble échangeur de chaleur et le distributeur à réorientation (4) est disposé sur l'extrémité opposée (B) et les conduites (5) s'étendent depuis une extrémité (A) vers l'extrémité opposée (B) et sont reliées au distributeur à réorientation (4) ainsi qu'au premier ou au deuxième distributeur (1, 2) et au moins une ouverture de ventilation (10) est disposée sur un point le plus élevé (T) ou au moins à proximité du point le plus élevé (T) du distributeur à réorientation (4) pour la compensation de pression avec l'environnement, **caractérisé en ce que**

a) est disposée dans l'au moins une ouverture de ventilation (10) une soupape (11), qui peut être ouverte et fermée, dans lequel en cas d'ouverture totale de la soupape (11), une section transversale d'écoulement (d) est libérée pour le passage d'air,
b) la section transversale tubulaire ($A_U$) du distributeur à réorientation (4) et la section transversale d'écoulement (d) de la soupape (11) sont identiques ou plus grandes qu'une section transversale minimale ($D_{min}$),
c) dans lequel la section transversale minimale ($D_{min}$) est calculée à partir du produit du nombre de colonnes dans l'ensemble de conduites (25) et de la section transversale tubulaire ($A_R$) des conduites ($D_{min} = n\,A_R$).

2. Ensemble échangeur de chaleur selon la revendication 1, **caractérisé en ce que** la soupape (11) ferme en toute autonomie l'ouverture de ventilation (10) en cas d'entrée du fluide dans la soupape.

3. Ensemble échangeur de chaleur selon la revendication 1 ou 2, **caractérisé en ce que** la soupape (11) peut être pilotée de manière hydraulique, pneumatique ou électrique, ou que la soupape (11) ferme mécaniquement en cas d'entrée du fluide dans la soupape (11).

4. Ensemble échangeur de chaleur selon la revendication 3, **caractérisé en ce que** la soupape (11) est pilotée de manière hydraulique, pneumatique ou électrique, dans lequel un signal de commande ferme la soupape (11) en fonction d'un temps de remplissage calculé ou d'une pression hydrostatique mesurée du fluide dans l'ensemble échangeur de chaleur.

5. Ensemble échangeur de chaleur selon l'une quelconque des revendications précédentes, **caractérisé en ce que** la soupape (11) contient une chambre (14) et un corps flottant (13) monté dans celle-ci de manière mobile, dans lequel en cas d'entrée du fluide dans la chambre, le corps flottant (13) ferme la soupape (11) et ainsi l'ouverture de ventilation (10).

6. Ensemble échangeur de chaleur selon l'une quelconque des revendications précédentes, **caractérisé en ce que** la soupape (11) est une soupape à étages multiples, en particulier à deux étages et contient une chambre (14), dans lequel en cas d'entrée du fluide dans la chambre, l'ouverture de ventilation (10) se ferme progressivement.

7. Ensemble échangeur de chaleur selon l'une quelconque des revendications 5 à 6, **caractérisé en ce qu'**un corps de soupape (16) est monté de manière mobile dans la chambre (14), dans lequel le corps de soupape (16) en cas d'entrée du fluide dans la chambre (14) est déplacé d'abord en direction d'un siège de soupape (15) et est pour finir pressé contre le siège de soupape (15).

8. Ensemble échangeur de chaleur selon la revendication 7, **caractérisé en ce que** le corps de soupape (16) présente une multitude d'ouvertures (17), qui réalisent une partie de la section transversale d'écoulement (d) de la soupape (11), et que le corps de soupape (16) est couplé au corps flottant (13) monté de manière mobile, lequel ferme en continu les ouvertures (17) en cas d'augmentation de la pression intérieure dans la chambre (14).

9. Ensemble échangeur de chaleur selon l'une quelconque des revendications précédentes, dans lequel le nombre de colonnes (n) dans l'ensemble de conduites (25) est compris entre 4 et 10 et de manière préférée entre 5 et 7.

10. Ensemble échangeur de chaleur selon l'une quelconque des revendications précédentes, dans lequel la section transversale minimale ($D_{min}$) est comprise entre 5 et 35 cm$^2$ et en particulier entre 10 et 15 cm$^2$.

11. Ensemble échangeur de chaleur selon l'une quelconque des revendications précédentes, dans lequel la section transversale tubulaire ($A_U$) du distributeur à réorientation (4) est plus grande que la section transversale d'écoulement (d) de la soupape (11).

12. Ensemble échangeur de chaleur selon l'une quelconque des revendications précédentes, dans lequel le diamètre ($D_U$) du distributeur à réorientation (4) est compris entre 30 mm et 200 mm.

13. Ensemble échangeur de chaleur selon l'une quelconque des revendications précédentes, dans lequel une soupape de révision (26) pouvant être actionnée manuellement ou pouvant être pilotée de manière électrique est disposée en plus de la soupape (11) sur le distributeur à réorientation (4).

14. Ensemble échangeur de chaleur selon l'une quelconque des revendications précédentes, **caractérisé en ce que** dans un mode de fonctionnement de vidange, le fluide s'écoule du fait de la force de gravité depuis toutes les conduites (5) dans le premier distributeur (1) et le deuxième distributeur (2), dans lequel dans le mode de fonctionnement de vidange, de l'air environnant circule dans l'échangeur de chaleur par la soupape (11) ouverte.

15. Ensemble échangeur de chaleur selon l'une quelconque des revendications précédentes, **caractérisé en ce que** dans un mode de fonctionnement de remplissage, le fluide s'écoule à l'encontre de la force de gravité depuis le premier distributeur (1) et le deuxième distributeur (2) dans les conduites (5), dans lequel de l'air s'échappe dans l'environnement par la soupape (11) ouverte hors de l'échangeur de chaleur.

16. Système de refroidissement comprenant

   a) un circuit (K), dans lequel de l'eau est guidée en tant que milieu de transport de chaleur,
   b) un contenant (B) relié au circuit (K), dans lequel de l'eau est stockée,
   c) une source de chaleur (W), laquelle amène de la chaleur au fluide sur l'emplacement de la source de chaleur,
   d) et un refroidisseur en circuit fermé (R), dans lequel l'eau est refroidie par échange de chaleur avec l'air ambiant,
   **caractérisé en ce que** le refroidisseur en circuit fermé (R) contient au moins un ensemble échangeur de chaleur (1) selon l'une quelconque des revendications précédentes.

**Fig. 1**

EP 3 956 619 B1

Fig. 2

**Fig. 3**

EP 3 956 619 B1

Fig. 4

Fig. 5

**Fig. 6**

Fluidstrom
Luftstrom

EP 3 956 619 B1

Fig. 6d

**Fig. 7**

(a)                                              (b)

EP 3 956 619 B1

Fig. 8

(a)  (b)  (c)

warm
kalt
kein Durchfluss

Fig. 9

Fig. 10

**Fig. 11**

EP 3 956 619 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018184908 A1

- WO 9015299 A